(19) **Europäisches Patentamt**

**European Patent Office**

**Office européen des brevets**

(11) **EP 1 555 180 B1**

(12) **FASCICULE DE BREVET EUROPEEN**

(45) Date de publication et mention
de la délivrance du brevet:
**15.11.2006 Bulletin 2006/46**

(51) Int Cl.:
**B60T 8/00** (2006.01)

(21) Numéro de dépôt: **05000242.7**

(22) Date de dépôt: **07.01.2005**

(54) **Système de contrôle de la stabilité d'un véhicule utilisant plusieurs algorithmes prédictifs et un processus de sélection**

System zur Stabilitätsregelung eines Fahrzeugs mit mehreren prädiktiven Algorithmen und einem Auswahlprozess

System for controlling vehicle stability using multiple predictive algorithms and a selection process

(84) Etats contractants désignés:
**AT BE BG CH CY CZ DE DK EE ES FI FR GB GR HU IE IS IT LI LT LU MC NL PL PT RO SE SI SK TR**

(30) Priorité: **16.01.2004 FR 0400422**
**27.05.2004 FR 0405823**

(43) Date de publication de la demande:
**20.07.2005 Bulletin 2005/29**

(73) Titulaires:
• **Société de Technologie Michelin**
**63000 Clermont-Ferrand (FR)**
• **MICHELIN Recherche et Technique S.A.**
**1763 Granges-Paccot (CH)**
• **ROBERT BOSCH GMBH**
**70442 Stuttgart (DE)**

(72) Inventeurs:
• **Fangeat, Nicolas**
**63400 Chamalieres (FR)**
• **Levy, Georges**
**Chiyoda-Ku**
**102-8176 Tokyo (JP)**

(74) Mandataire: **Bauvir, Jacques**
**M. F. P. MICHELIN**
**23, place des Carmes Dechaux**
**SGD/LG/PI - F35 - Ladoux**
**63040 Clermont-Ferrand Cedex 09 (FR)**

(56) Documents cités:
**EP-A- 1 371 534      EP-A- 1 372 049**
**US-A- 4 715 662      US-B1- 6 233 505**

**Description**

DOMAINE DE L'INVENTION

La présente invention se rapporte aux systèmes de pilotage de stabilité d'un véhicule. Dans une application particulière, l'invention se rapporte aux systèmes visant à éviter le blocage des roues lors de freinages appuyés, popularisée sous la désignation « ABS ». Plus généralement, l'invention concerne tous les systèmes visant à maintenir le véhicule sur une trajectoire stable en agissant automatiquement sur des actuateurs comme ceux déterminant un couple moteur ou freineur aux roues, ou ceux déterminant le braquage d'une ou de plusieurs roues, ou même ceux concernant la suspension, dont on sait que cela a aussi avoir un effet sur le contrôle de la trajectoire (par exemple antiroulis actif). Dans l'application particulière évoquée ci-dessus, les actuateurs sont les freins d'une roue ou l'organe imposant un couple moteur à une roue.

ETAT DE LA TECHNIQUE

Pour rappel, le coefficient d'adhérence longitudinale $\mu$ du pneumatique est le quotient de la force longitudinale divisée par la force verticale appliquée, c'est à dire la charge appliquée sur le pneumatique (dans le cas simplifié d'un effort de freinage pur et l'homme du métier saura facilement généraliser) ; le glissement G du pneumatique vaut G = 0% lorsqu'il n'y a pas de glissement entre la vitesse du pneumatique et la vitesse du véhicule, c'est à dire si le pneu roule librement, et G = 100% si le pneu est bloqué en rotation. Typiquement, en fonction de l'environnement (nature du sol (asphalte, béton), sec ou mouillé (hauteur d'eau), température et niveau d'usure du pneumatique), la valeur de $\mu$ en fonction du glissement G et de la nature du sol peut varier énormément ($\mu_{max}$ vaut environ 0.15 sur de la glace et environ 1.2 sur un sol sec).

On sait que le freinage d'un véhicule sera d'autant plus efficace que l'on parviendra à faire fonctionner la bande de roulement à un glissement G correspondant à la valeur maximale du coefficient d'adhérence (parfois aussi appelé coefficient de frottement). On appelle $\mu_{max}$ la valeur maximale du coefficient d'adhérence. Mais le conducteur moyen n'est pas capable de doser le freinage de façon à satisfaire à cette condition.

C'est la raison pour laquelle ont été développés des systèmes de contrôle de la stabilité d'un véhicule modulant automatiquement la force de freinage de façon à viser une cible de glissement prédéterminée, censée correspondre au maximum du coefficient d'adhérence.

En particulier, la demande de brevet EP 1371534 publiée le 17 décembre 2003 propose un procédé de régulation du glissement utilisant une grandeur appelée « Invariant » que les recherches des inventeurs ont permis de découvrir, cette grandeur étant ainsi appelée parce qu'elle est sensiblement constante quel que soit le pneu considéré et quelle que soit l'adhérence du sol sur lequel le pneu roule.

Si ce procédé permet de déterminer une cible de glissement pour lequel on est effectivement bien plus proche du coefficient d'adhérence maximal réel du pneu dans les circonstances de roulage réelles, il existe cependant des cas où l'on peut déterminer une cible meilleure encore pour améliorer l'efficacité du freinage (ou de l'accélération).

BREVE DESCRIPTION DE L'INVENTION

L'invention propose un système de contrôle de la stabilité d'un véhicule utilisant plusieurs algorithmes prédictifs et un processus de sélection.

Dans une formulation générale, l'invention propose un système de contrôle de la stabilité d'un véhicule dans lequel un paramètre caractéristique Q du fonctionnement d'un pneumatique du véhicule destiné à rouler sur un sol varie en fonction d'un paramètre P selon une certaine loi, une valeur optimale dudit paramètre P étant imposée par un contrôleur de manière directe ou indirecte de façon à agir sur au moins l'un des éléments choisis dans le groupe comportant le couple de rotation appliqué au pneumatique, l'angle de braquage du pneumatique, l'angle de carrossage du pneumatique et la force verticale appliquée au pneumatique, dans lequel le contrôleur comporte des moyens pour :

- Déterminer des estimations ou des mesures $(P_i, Q_i)$ pour des niveaux « i » successifs de valeurs ;
- utiliser en parallèle « n » algorithmes de calcul déterminant chacun une valeur cible dudit paramètre et obtenir ainsi autant de valeurs cibles $P^{Cn}$ que d'algorithmes utilisés,
- sélectionner comme valeur optimale du paramètre la meilleure des valeurs cibles $P^{Cn}$ en soumettant les « n » valeurs cibles $P^{Cn}$ à des comparaisons visant à éliminer les valeurs cibles les moins vraisemblables.

Le résultat recherché est de maintenir la valeur d'un paramètre Q à une valeur choisie comme étant idéale dans la situation du véhicule du moment. Dans le présent mémoire, on décrit en détails une application au contrôle du glissement d'un pneu, typiquement pendant une manoeuvre de freinage ou pendant une manoeuvre agissant sur le lacet d'un véhicule (fonction connue sous le nom d'ABS dans le premier cas ou fonction connue sous le nom d'ESP dans le second cas). Enfin, on évoque une application visant au contrôle de la trajectoire en utilisant des actuateurs autres que ceux agissant sur le couple aux roues.

Dans une première application, l'invention propose donc un système de contrôle de la stabilité d'un véhicule dans lequel le paramètre P est le glissement G du pneumatique et le paramètre caractéristique Q est le coefficient d'adhérence $\mu$ du pneumatique, le système comportant des moyens pour imprimer au pneu un effort longitudinal, des moyens de modulation de l'effort longitudinal et des moyens pour calculer le paramètre glissement $G^{Opt}$ lors de chaque activation des moyens pour imprimer au pneu un effort longitudinal de la façon suivante :

- déterminer les valeurs du coefficient d'adhérence $\mu_i$, pour chaque glissement $G_i$ correspondant à des niveaux « i » successifs de l'effort longitudinal,
- utiliser en parallèle « n » algorithmes de calcul déterminant chacun une valeur cible dudit glissement et obtenir ainsi autant de valeurs cibles $G^{Cn}$ que d'algorithmes utilisés,
- sélectionner comme valeur du glissement optimal $G^{Opt}$ la meilleure des valeurs cibles $G^{Cn}$ en soumettant les « n » valeurs cibles $G^{Cn}$ à des comparaisons visant à éliminer les valeurs cibles les moins vraisemblables.

La présente invention propose donc de, en fonction d'observations faites au tout début de chaque manoeuvre de variation de couple (typiquement au tout début de chaque manoeuvre de freinage mais cela est valable aussi au début de chaque accélération ou pour d'autres manoeuvres comme un braquage), à partir des observations (mesures ou estimations), calculer les valeurs de glissement cible selon plusieurs algorithmes et sélectionner parmi ces cibles la valeur optimale de glissement finalement retenue par la régulation du glissement. Le résultat visé est donc de maintenir la valeur du coefficient d'adhérence du pneu à une valeur choisie comme étant idéale dans la situation du véhicule du moment, par exemple à la valeur maximale possible.

L'application de choix de la présente invention réside dans le pilotage du glissement d'une roue en freinage. Toute la description suivante concerne dans ce cas un dispositif de modulation de l'effort longitudinal qui agit sur la commande de freinage. Indiquons une fois pour toutes que dans ce cas, on initialise (i=0) les opérations indiquées ci-dessus, et plus en détails ci-dessous, à chaque début de manoeuvre de freinage. Mais si l'on décide d'appliquer la présente invention au pilotage du glissement d'une roue en accélération, le dispositif de modulation de l'effort longitudinal agit sur le couple moteur aux roues et on initialise (i=0) les opérations indiquées à chaque demande de variation du couple moteur supérieure à un seuil de couple prédéterminé.

Notons aussi que, dans le contexte de la présente invention, peu importe que la bande de roulement dont on traite la caractéristique d'adhérence soit celle d'un pneumatique ou d'un bandage élastique non pneumatique ou encore d'une chenille. Les termes « bande de roulement », « pneu » ou « pneumatique », « bandage », « bandage élastique », « chenille » ou même « roue » doivent être interprétés comme équivalents. Remarquons aussi que la détermination des valeurs du coefficient d'adhérence $\mu_i$, pour chaque glissement $G_i$ peut se faire par mesure directe ou par estimation à partir d'autres mesures ou de l'estimation d'autres grandeurs comme l'effort dans le plan du sol et la charge verticale.

La sélection du glissement optimal procède d'une évaluation comparative entre tous les algorithmes. Par exemple, pour chaque algorithme de 1 à n, après acquisition de suffisamment de valeurs $G_i$, on opère un bilan comparatif en calculant la valeur absolue de l'écart relatif entre la cible $G^{Cn}$ de l'algorithme « n » et la cible $G^{Csel\#n-1}$ de la sélection précédente « n - 1 ». A l'aide d'une valeur caractéristique ($\lambda$) du fonctionnement physique de la rotation du pneu sur le sol, on choisit une plage de tolérance sur l'écart calculé précédemment et sur la base de cette valeur caractéristique. La sélection procède comme suit : si l'écart est compris dans la plage de tolérance, sélectionner $G^{Cn}$ comme valeur du glissement optimal $G^{Opt}$; si l'écart n'est pas compris dans la plage de tolérance, sélectionner $G^{Csel\#n-1}$ comme valeur du glissement optimal $G^{Opt}$.

Pour le premier choix, on aura déterminé expérimentalement un algorithme préféré, par exemple l'algorithme donnant statistiquement la cible la plus proche de la cible idéale. Cet algorithme choisi pour amorcer les itérations donne une première sélection pour la cible, c'est à dire une première valeur de référence, d'où la désignation de cible $G^{Csel\#n-1}$.

On peut retenir comme valeur caractéristique $\lambda$ la variation par rapport au temps de G car cela décrit assez bien le type de sol sur lequel on se trouve ; on sait que sur un sol faiblement adhérent la roue va très vite au blocage donc la variation par rapport au temps sera grande et inversement.

Les limites de la plage de tolérance sont calculées par logique booléenne ou par logique floue ou par une fonction mathématique quelconque.

La suite de la description illustre l'invention utilisée pour sélectionner, selon les circonstances, le plus pertinent de trois algorithmes :

- un premier algorithme reprenant le principe de l'Invariant illustré dans la demande de brevet précitée pour tout ce qui concerne la détermination du glissement cible au moyen de ce principe, que l'on appellera dans le présent mémoire par commodité « algorithme Invariant », également désigné par « Invt » ;

- un deuxième algorithme, nouveau en soi, que l'on appellera dans le présent mémoire par commodité « algorithme Moyen », également désigné par « Avg » ;
- un troisième algorithme, nouveau en soi, que l'on appellera dans le présent mémoire par commodité « algorithme Mouillé », également désigné par « Wet ».

BREVE DESCRIPTION DES FIGURES

Les figures suivantes montrent :

La figure 1 est un schéma de principe de l'invention ;
La figure 2 illustre un traitement particulier des premières acquisitions de mesures ou d'estimations ;
La figure 3 illustre plus en détails ledit traitement particulier ;
La figure 4 illustre un autre traitement particulier des acquisitions de mesures ou d'estimations ;
La figure 5 illustre l'algorithme Invariant ;
La figure 6 illustre l'algorithme Moyen ;
La figure 7 illustre l'algorithme Mouillé ;
La figure 8 est un schéma bloc illustrant une mise en oeuvre de l'invention.

DESCRIPTION DU MEILLEUR MODE DE REALISATION DE L'INVENTION

*Rappels sur l'Algorithme « Invariant »*

On ne fait ici que de brefs rappels concernant l'algorithme Invariant. On consultera en particulier l'exemple 1 décrit dans la demande de brevet précitée, relatif au maintien automatique du fonctionnement d'un pneu sur un véhicule à un certain coefficient d'adhérence, par exemple au coefficient d'adhérence maximal $\mu_{max}$. L'algorithme Invariant permet en particulier d'asservir le glissement G de façon à le maintenir à une valeur optimale $G^{Opt}$ prédéterminé. Ledit glissement prédéterminé $G^{Opt}$ est plus particulièrement et de façon non limitative, choisi de telle sorte que la valeur prédéterminée du coefficient d'adhérence corresponde sensiblement à la valeur Dans ce cas, il est convenu d'appeler cette valeur optimale particulière $G_{max}$. On observe que la position du maximum pour ce pneu varie en fonction du sol. Il existe un Invariant « Invt » commun à ces différents sols.
Par application de l'équation de détermination de l'Invariant au cas de l'analyse du coefficient d'adhérence en fonction du glissement, l'Invariant est calculé en particulier de la façon suivante :

$$Invt = \frac{\frac{\mu}{G}(G_{max})}{\frac{\mu}{G}(p.G_{max})},$$

avec p ayant une valeur positive et inférieure à 1.
En ce qui concerne p, sa valeur est de préférence comprise entre 0.25 et 0.75, par exemple elle vaut 0.5, le lecteur étant renvoyé à la description de la demande de brevet précitée quant aux conséquences du choix de la valeur de p.
On obtient ainsi :

$$\frac{\frac{\mu}{G}(G = G_{max})}{\frac{\mu}{G}(G = G_{max}/2)} \approx 0.58$$

On a introduit un Invariant « Invt » en procédant à un traitement des données à une première valeur du glissement G, correspondant au maximum du coefficient d'adhérence $\mu_{max}$, et à une seconde valeur correspondant à 50% de la première valeur, par exemple 50% du glissement précédemment évoqué. On peut ainsi en déduire une première valeur de « Invt ».

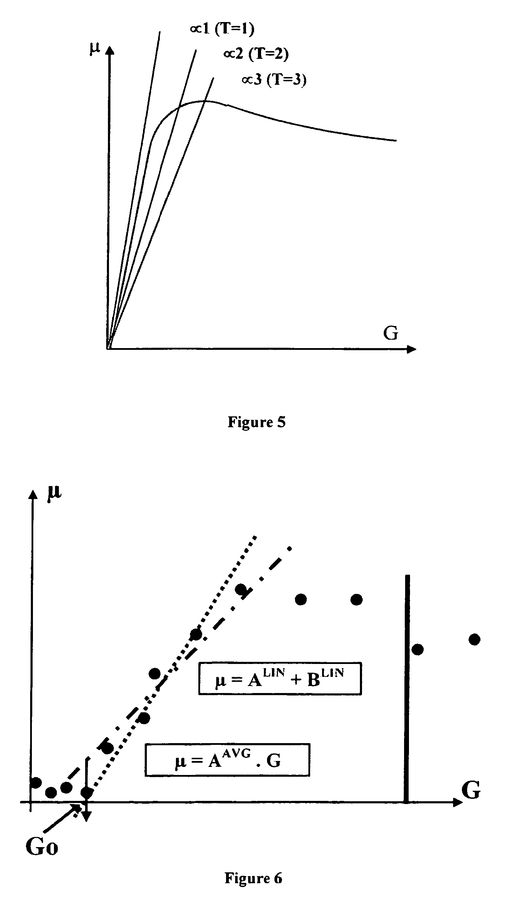

Il convient ensuite de procéder à la détermination de la pente $\alpha_i$ de la courbe $\mu_i = f(G_i)$ illustrée à la figure 5. On procède pour ce faire par calcul direct $\alpha_i = \mu_i/G_i$ ou on utilise une régression adaptée, par exemple une régression linéaire.

Par exemple, on calcule deux coefficients particuliers $A^{Lin}$ et $B^{Lin}$ par la régression linéaire suivante, appliquée à « q » points de mesure ou d'estimation :

$$A^{Lin} = \frac{q \cdot \sum G \cdot \alpha - \sum G \cdot \sum \alpha}{q \cdot \sum G^2 - \left(\sum G\right)^2}, B^{Lin} = \frac{\sum \alpha \cdot \sum G^2 - \sum G \cdot \alpha \cdot \sum G}{q \cdot \sum G^2 - \left(\sum G\right)^2}$$

ce qui donne l'expression de la pente $\alpha = A^{Lin} \cdot G + B^{Lin}$

Ensuite, le calcul de $G^{Opt}$ se fait de la façon suivante :

$$G^{Opt} = -\frac{B^{Lin}}{A^{Lin}} \cdot \frac{1 - Invt}{1 - p \cdot Invt} ,$$

Une autre régression bien adaptée est une régression exponentielle.

Ainsi, un premier algorithme dit « algorithme Invariant », effectue les opérations suivantes :

- Déterminer la pente $\alpha_i$ de la droite passant par l'origine et par $(G_i, \mu_i)$,
- Calculer des coefficients $A_{.P.}$ par calcul direct ou par une régression appropriée à partir d'un nombre suffisant de paires $(\alpha_i, G_i)$ de façon à modéliser une courbe de variation $\alpha_i = f(G;, A_{.P.})$,
- Calculer un premier glissement cible $G^{Cinvt}$ en utilisant un Invariant "Invt" prédéterminé.

On a vu que l'Invariant « Invt » vaut sensiblement 0,58. Mais, en pratique, on peut utiliser l'Invariant « Invt » comme un paramètre de mise au point du système.

*Description de l'Aligorithme « Moyen »*

L'algorithme « Moyen » consiste à détecter le changement dans la courbure de la courbe $\mu(G)$. On comprend en effet qu'un tel changement est révélateur de la proximité du maximum d'adhérence. Pour cela, on traite les mesures ou les estimations des valeurs de glissement et de coefficient d'adhérence associées à deux régressions dont l'une vise à modéliser une courbe de variation qui passe obligatoirement par l'origine et dont l'autre vise à modéliser une courbe de variation qui ne passe pas obligatoirement par l'origine, c'est à dire dont le premier point est laissé libre.

Ainsi, un deuxième algorithme effectue les opérations suivantes :

- Déterminer des coefficients $A_{[avg/p]}$ par calcul direct ou par une régression appropriée, à partir d'un nombre suffisant de paires $(\mu_i G_i)$, de façon à modéliser une première courbe de variation $\mu_i = f(G_i, A_{[avg/p]})$ incluant obligatoirement par convention l'origine, et la ou les paires $(\mu_i, G_i)$, dans lesquelles $\mu_i$ est différent de zéro,
- Déterminer un indicateur de la pente moyenne $\alpha_1$ de ladite première courbe de variation,
- Déterminer des coefficients $B_{[avg/p]}$ par calcul direct ou par une régression appropriée, à partir d'un nombre suffisant de paires $(\mu_i, G_i)$, de façon à modéliser une deuxième courbe de variation $\mu_i = f(G_i, B_{[avg/p]})$ incluant la ou les paires $(\mu_i, G_i)$, dans lesquelles $\mu_i$ est différent de zéro,
- Déterminer un indicateur de la pente moyenne $\alpha_2$ de la deuxième courbe de variation,
- Tant que la différence entre $\alpha_1$ et $\alpha_2$ est inférieure à un seuil de pente prédéterminé, reprendre les opérations précédentes pour chaque nouvelle acquisition de paire de valeurs $(G_i, \mu_i)$,
- Dès que la différence entre $\alpha_1$ et $\alpha_2$ dépasse le seuil de pente prédéterminé, déterminer un glissement cible $G^{Cavg}$ en utilisant au moins la dernière paire de valeurs $(G_i, \mu_i)$.

De préférence, on ajoute une deuxième condition provoquant la détermination du deuxième glissement cible en utilisant au moins la dernière paire de valeurs $(G_i, \mu_i)$, la deuxième condition étant dès que $G_i$ dépasse un seuil prédéterminé, par exemple 15%.

Il est tout particulièrement indiqué d'utiliser des régressions linéaires. Dans ce cas, on regarde la différence entre deux régressions linéaires, comme illustré à la figure 6. Dans ce cas,

- La première courbe de variation, représentée par un trait pointillé à la figure 6, est une première droite $\mu_i = A_{avg} \cdot G_i$, incluant par convention l'origine (à une correction $G_0$ près, correction qui sera expliqué plus loin) et la ou les paires $(\mu_i, G_i)$, obtenue par une première régression linéaire calculant un premier coefficient $A_{avg}$,
- La deuxième courbe de variation, représentée par en trait d'axe à la figure 6, est une deuxième droite $\mu_i = A_{lin} \cdot G_i + B_{lin}$ (droite moins verticale) incluant la ou les paires $(\mu_i, G_i)$, que l'on laisse libre de ne pas passer par l'origine, et est obtenue par une deuxième régression linéaire calculant des coefficients $A_{lin}$ et $B_{lin}$ (ce qui n'exclut pas une correction $G_0$ qui sera expliqué plus loin).

Bien entendu, s'agissant de régressions linéaires, les indicateurs $\alpha_1$ et $\alpha_2$ sont directement les pentes respectives $A_{avg}$ et $A_{lin}$ de chacune des droites.

Il a été déterminé expérimentalement que, dans le cas de modélisation par des droites (régressions linéaires), le seuil de pente prédéterminé pour la différence entre $\alpha_1$ et $\alpha_2$ est de préférence de l'ordre de 30%.

Au final, le glissement cible $G^{Cavg}$ retenu peut être tout simplement égal à la dernière valeur G;. En alternative et d'une façon plus précise, on détermine le glissement cible $G^{Cavg} = \beta \cdot \dfrac{\mu^{MAX}}{A^{AVG}}$ avec $\beta$ un paramètre de mise au point. Quand on parle dans le présent mémoire d'un paramètre de mise au point, cela signifie que, même s'il existe pour ce paramètre une valeur ou une plage de valeurs représentatives d'une réalité physique, on peut en pratique utiliser arbitrairement ce paramètre comme un bouton de réglage fin du fonctionnement pratique du système de contrôle de la stabilité d'un véhicule, c'est à dire un paramètre utilisé dans la mise au point du système. Ajoutons simplement que le paramètre $\beta$ présente une analogie avec l'Invariant, ce qui se traduit pour $\beta$ par une valeur d'environ 1,04 à rapprocher de la valeur 0,58 pour l'Invariant.

Comme on le verra dans la suite, sans que cela soit limitatif, il est proposé que l'algorithme Moyen soit choisi comme la valeur de référence pour la détermination du glissement cible car on a remarqué expérimentalement que c'est celui qui est le plus robuste pour tous les types de pneus et tous les types de sols. C'est donc cet algorithme qui sert à valider des choix de cible basés sur les autres algorithmes. Un exemple de processus de choix entre les algorithmes est décrit à la fin du présent mémoire.

## Description de l'Algorithme « Mouillé »

Comme son nom l'indique, cet algorithme est plus particulièrement conçu pour le calcul de cible sur sol mouillé (en fait tous les sols de faible adhérence). En effet, sur ce type de sol, la roue va très rapidement au blocage et l'on risque de s'apercevoir trop tard que le maximum de la courbe $\mu(G)$ est dépassé.

Le principe de cet algorithme consiste à étudier l'évolution de la dérivée du glissement en fonction du temps. Si l'on constate une évolution trop rapide, c'est à dire en fait un changement du glissement trop rapide, on peut présumer que le système n'est plus stable parce que l'on a dépassé ou l'on est en passe de dépasser le glissement correspondant à l'adhérence maximale. Cet algorithme consiste donc à:

- Au fur et à mesure de l'acquisition des valeurs de $G_i$, calculer la variation par rapport au temps de G,
- Tant que ladite variation est supérieure à un seuil bas, calculer des coefficients $A_{[wet, p]}$ par calcul direct ou par une régression appropriée de façon à modéliser la variation par rapport au temps de G par une courbe de variation qui est une fonction de $(G_i, A_{[wet,p]})$,
- Dès que ladite variation est supérieure à un seuil haut, déterminer un troisième glissement cible $G^{Cwet}$ en utilisant au moins les dernières valeurs de $A_{[wet, p]}$.

De préférence, ledit algorithme n'est utilisé qu'avec des valeurs de glissement supérieures à de 4%. De façon avantageuse, ledit seuil bas est de l'ordre de 100% par seconde et ledit seuil haut est de l'ordre de 300% par seconde.

Une application simple de cet algorithme utilise une régression linéaire, ce qui fait que l'on calcule des coefficients $A_{wet}$ et $B_{wet}$ de la façon suivants :

- 

$$\frac{dG}{dt} = A^{WET} \cdot G + B^{WET}$$

et le troisième glissement cible $G^{Cwet}$ est donc déterminé de la façon suivante :

•

$$G^{Cwet} = \frac{dG\_tgt - B^{WET}}{A^{WET}} \cdot$$

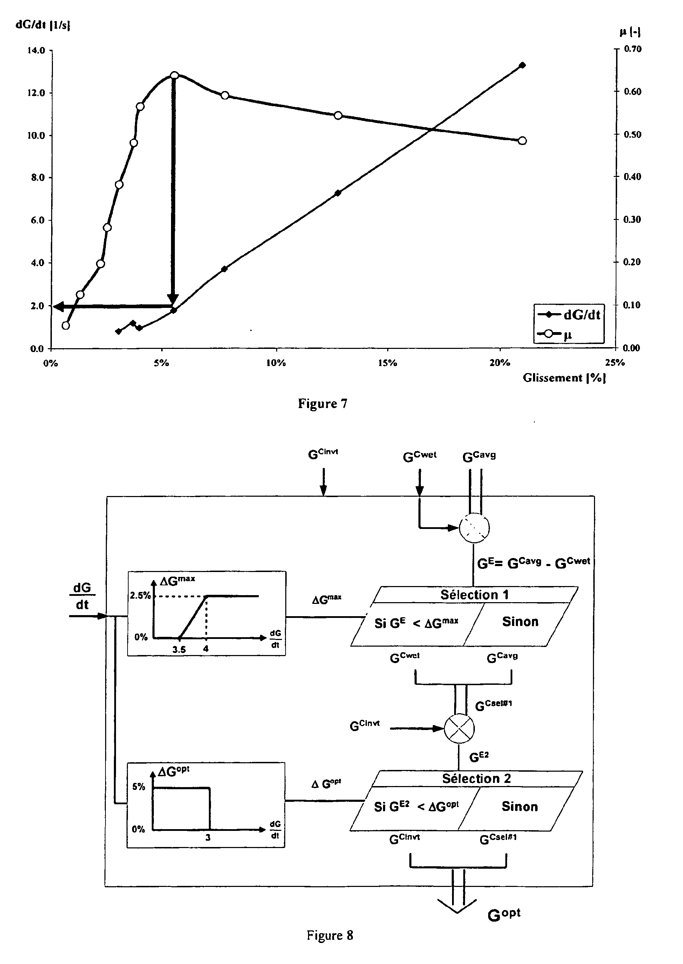

Bien qu'une valeur expérimentale de 200% par seconde pour le paramètre « dG_tgt » ait donné de bons résultats comme montré à la figure 7, on peut en pratique utiliser arbitrairement ce paramètre comme un bouton de réglage fin du fonctionnement pratique du système de contrôle de la stabilité d'un véhicule, tout comme évoqué à propos des paramètres β et Invariant.

*Suggestions d'améliorations concernant les premières acquisitions de données*

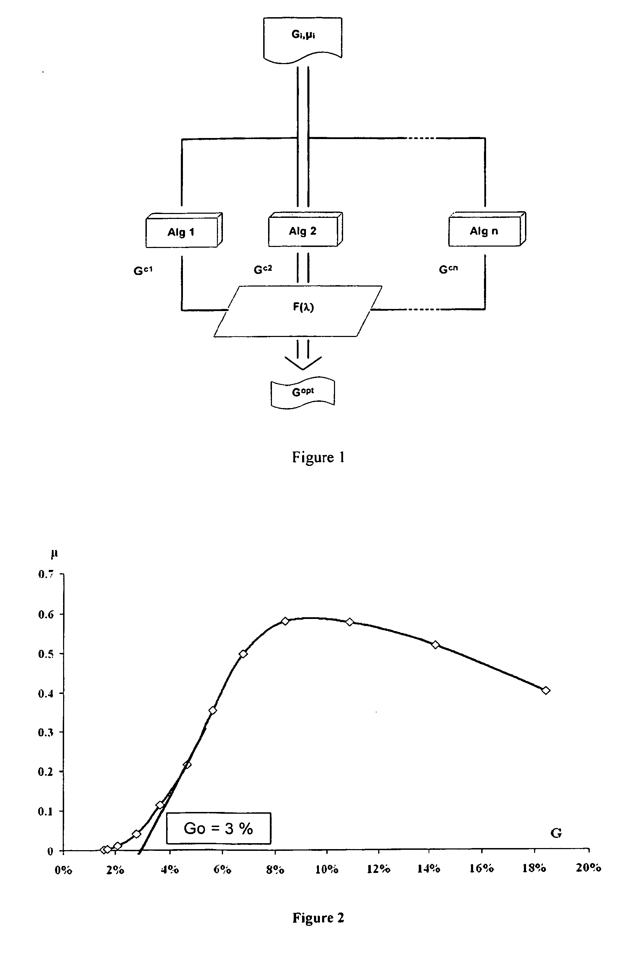

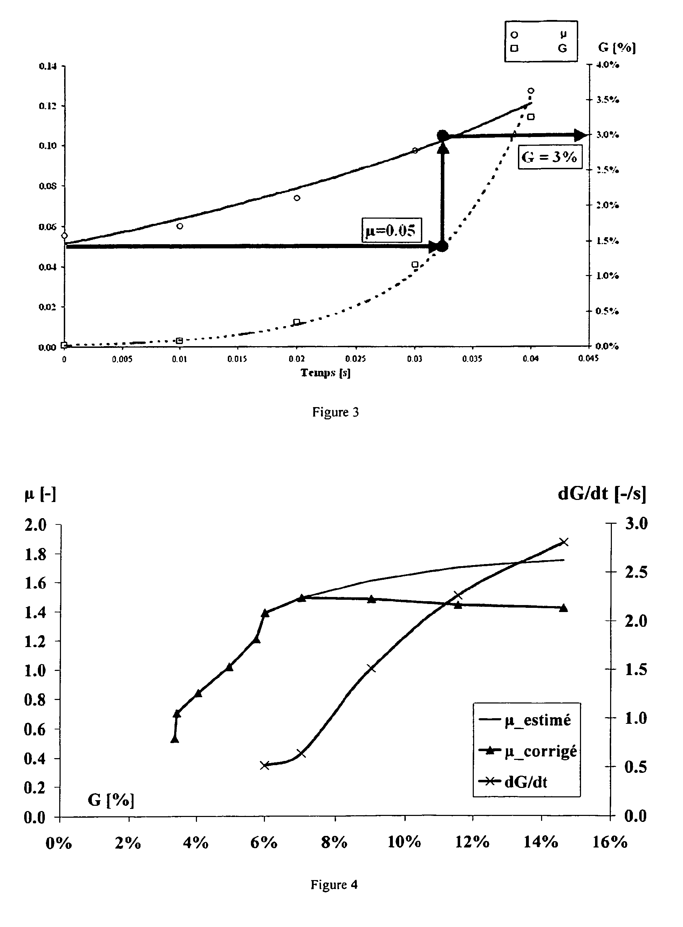

Avant de poursuivre, il est proposé quelques corrections aux valeurs faibles de glissement et coefficient d'adhérence obtenues au tout début d'une manoeuvre de freinage. Au début des freinages, il a été constaté que la courbe $\mu(G)$ peut présenter un comportement étrange. Le but de cette première partie de l'algorithme est de corriger ce comportement. Aux figures 2 et 3, on peut voir que sur un sol mouillé, le pied de la courbe $\mu(G)$ ne semble pas linéaire et que pour un $\mu$ nul, le glissement ne l'est pas. Ceci est probablement dû aux erreurs dans la valeur du glissement mesuré. Cela n'est à l'évidence pas représentatif des phénomènes physiques dans le contact de la bande de roulement sur le sol. Cela est gênant pour les algorithmes de calcul du glissement cible qui sont basés sur l'étude de la pente de la courbe $\mu(G)$. Bien entendu, cela est très dépendant des moyens technologiques concrets mis en oeuvre sur le véhicule pour acquérir ces informations. Dès lors, les indications fournies dans ce contexte sont de simples suggestions qu'il est utile d'appliquer si l'on fait face à ce problème, mais qui ne sont pas limitatives. Plus généralement, il est utile de corriger autoritairement la forme du pied de la courbe de variation du coefficient d'adhérence en fonction du glissement si elle présente une allure fort peu plausible.

La première partie du traitement des données va donc constituer à calculer la valeur du glissement à partir de laquelle on peut utiliser les données pour calculer de façon fiable un glissement cible ou le glissement optimal. Convenons d'appeler ce glissement $G_0$. La figure 2 montre que ce glissement $G_0$ vaut environ 3%. On obtient une allure plus plausible de la courbe $\mu(G)$ en reliant $G_0$ à la partie sensiblement linéaire de la partie croissante de la courbe.

Dès lors, de préférence, le système de contrôle de la stabilité d'un véhicule est tel que l'on procède, avant toutes les opérations exploitant la courbe de variation de $\mu_i$ en fonction de $G_i$, à une correction du départ de ladite courbe en éliminant les premières paires réelles $(\mu_i, G_i)$ tant que la variation de $\mu_i$ en fonction de $G_i$ n'est pas sensiblement constante et en recherchant le glissement $G_0$ associé à un coefficient d'adhérence nul (ceci n'étant bien entendu pas limitatif) tel que la paire $(0, G_0)$ et les paires non éliminées $(\mu_i, G_i)$ sont sensiblement alignées, et utilisant une courbe partant de $(0, G_0)$ et rejoignant les paires non éliminées $(\mu_i, G_i)$, de sorte que, pour toute valeur de $G_i$ plus grande que $G_0$, $G_i$ est remplacée par $G_i - G_0$.

Pour cela, par exemple, on utilise un algorithme qui comporte les étapes suivantes:

- éliminer systématiquement toutes les valeurs du glissement associées à un coefficient d'adhérence inférieur à 0,01 ;
- Calculer de façon continue des régressions de $\mu$ et $G$ en fonction du temps, de préférence des régressions exponentielles vu l'allure du pied de la courbe dans l'exemple illustré au moyen de la figure 2 et de la figure 3 :

$$\mu = e^{A^\mu \cdot (t - T^{Start}) + B^\mu} \ , \ G = e^{A^G \cdot (t - T^{Start}) + B^G}$$

On peut considérer que les valeurs acquises sont représentatives de la réalité lorsque le coefficient d'adhérence estimé ou mesuré est supérieur à 0,1 ou lorsque le glissement dépasse 4%.

La figure 3 illustre la façon de déterminer $G_0$ à partir des courbes donnant les valeurs acquises respectivement pour le coefficient d'adhérence en fonction du temps et pour le glissement en fonction du temps. On cherche la valeur du temps pour laquelle la régression sur la courbe de $\mu$ vaut une certaine valeur, par exemple 0,05 (voir le segment horizontal entre une abscisse nulle et une ordonnée valant 0,05 et la courbe en pointillés). La valeur de $G_0$ sera la valeur de la régression sur la courbe du glissement à cet instant (voir le segment vertical entre le point précédemment obtenu et un point sur la courbe en trait continu, donnant la valeur du glissement $G_0$).

On procède donc, avant toutes les opérations exploitant la courbe de variation de $\mu_i$ en fonction de $G_i$, à une correction du départ de ladite courbe en éliminant les premières paires réelles $(\mu_i, G_i)$ tant que la variation de $\mu_i$ en fonction de $G_i$ n'est pas sensiblement constante et en recherchant le glissement $G_0$ associé à un coefficient d'adhérence nul tel que la paire $(0, G_0)$ et les paires non éliminées $(\mu_i, G_i)$ sont sensiblement alignées, et utilisant une courbe partant

de $(0, G_0)$ et rejoignant les paires non éliminées $(\mu_i, G_i)$. Ensuite, dans tous les algorithmes utilisés, pour toute valeur de $G_i$ plus grande que $G_0$, $G_i$ est remplacée par $G_i - G_0$.

On a jusqu'à présent supposé calculées ou estimées des valeurs de $\mu$. Cependant, dans certains cas, le mode d'obtention du coefficient d'adhérence (à partir de l'effort de freinage lui-même estimé sur la base de la pression de freinage compte tenu des caractéristiques particulières chaque véhicule et à partir de la vitesse de roue) ne donne pas de résultat satisfaisant (la courbe $\mu(G)$ calculée est trop plate ou continûment ascendante). On sait que cela n'est pas réaliste. Pour corriger ce problème, une correction numérique du $\mu$ calculé peut être mise en place. Cette correction est basée sur la vitesse d'évolution du glissement en fonction du temps. En effet, si la vitesse de la roue (et donc le glissement) s'emballe de façon rapide, c'est que l'on se trouve dans la zone instable de la courbe $\mu(G)$. Donc la courbe $\mu(G)$ devrait décroître, ce que l'on met à profit dans un système de contrôle de la stabilité d'un véhicule dans lequel, lorsque la variation par rapport au temps du glissement devient supérieure à un seuil de variation prédéterminé, on procède, avant toutes les opérations exploitant la courbe de variation de $\mu_i$ en fonction de $G_i$, à une correction de la fin de ladite courbe en remplaçant les valeurs de $\mu_i$ correspondant à des glissements amenant la variation par rapport au temps du glissement au-delà dudit seuil de variation prédéterminé, par des valeurs corrigées comme suit :

$$\mu_i^{\,Corr} = \mu_i^{\,acquis} \cdot \left[ Max\left( \frac{dG}{dt} ; 1 \right) \right]^{-ACorr}$$

où « Acorr » est un coefficient de mise au point et peut être spécifique à chaque algorithme. Par exemple, une bonne valeur pratique s'est avérée être 0.2 pour l'algorithme «Moyen ». La figure 4 illustre cette correction. Grâce à cette correction, la courbe $\mu(G)$ retrouve une forme certainement plus conforme à la réalité physique, ce qui permet aux algorithmes de produire des cibles fiables.

Remarquons que, si la valeur du $\mu_{max}$ est en elle-même modifiée par cette correction, tous les algorithmes utilisés se basent sur la forme de la courbe et non sur ses valeurs. Le lecteur est également renvoyé à la demande de brevet précitée où l'on a fait ressortir que l'algorithme « Invariant » permet de calculer une cible de glissement sans même calculer la valeur exacte du coefficient d'adhérence associé, celui-ci étant inutile au bon fonctionnement de l'asservissement en glissement d'une la roue de véhicule.

*Sélection entre les glissements cibles donnés par les différents algorithmes*

Différentes cibles ont été calculées grâces aux algorithmes présentés (Invariant, Moyen, Mouillé). Le principe général de sélection est illustré à la figure 1. On voit que l'on exploite des mesures ou des estimations, disons en général des acquisitions du glissement $G_i$ et du coefficient de glissement $\mu_i$ associé à chacune « i » des valeurs du glissement. On calcule en parallèle une valeur cible $G^{ci}$ du glissement au moyen de n algorithmes Alg « n ». Enfin, on choisit parmi ces valeurs cibles en procédant à des comparaisons utilisant une fonction $f(\lambda)$ permettant de retrouver une ou des valeurs caractéristiques du fonctionnement physique de la rotation du pneu sur le sol.

On va maintenant décrire un cas pratique, non limitatif, de mise en oeuvre du choix de la valeur finale, c'est à dire du glissement optimal utilisé pour la régulation du glissement d'une roue.

La figure 8 illustre les opérations. On retient ici l'algorithme « Moyen » comme une référence qui sert à juger les autres. Le principe de l'algorithme de choix entre les différentes cible repose sur le fait qu'une des cibles serre de valeur de référence dans laquelle on a une bonne confiance quel que soit le type de sol. Le choix sera fait à parti de l'écart avec cette valeur de référence et avec l'aide de la dérivée du glissement en fonction du temps $\left( \dfrac{dG}{dt} \right)$ pour caractériser les types de sols.

La sélection du glissement optimal, parmi les valeurs cibles données par les algorithmes « Moyen » et « Mouillé », s'opère par exemple de la façon suivante :

- Calculer l'écart relatif en valeur absolue $G^E$ entre $G^{Cavg}$ et $G^{Cwet}$,
- Présélectionner une valeur $G^{Csel\#1}$ de la façon suivante :

   > tant que ladite variation par rapport au temps de G est comprise dans une zone prédéterminée, retenir comme valeur $G^{Csel\#1}$ la valeur de $G^{Cavg}$,
   > lorsque ladite variation par rapport au temps de G n'est pas comprise dans cette zone prédéterminée, on détermine une plage critique prédéterminée dont l'amplitude dépend de ladite variation par rapport au temps de G et :

si $G^E$ est compris dans la plage critique prédéterminée, retenir comme valeur $G^{Csel\#1}$ la valeur de $G^{Cavg}$,
si $G^E$ n'est pas compris dans la plage critique prédéterminée, retenir comme valeur $G^{Csel\#1}$ la valeur de $G^{Cwet}$,

• prendre comme sélection finale de la valeur du glissement optimal $G^{Opt}$ la valeur $G^{Csel\#1}$.

Il est avantageux que ladite zone prédéterminée corresponde aux variations par rapport au temps du glissement G inférieures à une limite basse, et que ladite plage critique prédéterminée corresponde aux variations par rapport au temps du glissement G supérieures à un premier seuil critique $\Delta G_{max}$. La limite basse et le seuil critique sont des paramètres de mise au point du système.

Le seuil critique est de préférence choisi par un processus de logique floue, afin d'être variable et mieux adapté aux circonstances réelles. Par ce processus, la valeur du seuil pourra varier en fonction de la valeur de la variation par rapport au temps du glissement G. A titre purement illustratif, on a constaté de bons résultats en laissant varier le seuil critique entre 0 % et 2,5 % pour une valeur de la variation du glissement en fonction du temps variant entre 350 % (limite basse) et 400 % par seconde (limite haute), et en fixant le seuil critique à 2.5 % pour les valeurs supérieures à cette limite haute.

Ensuite, si l'on utilise un algorithme « Invariant », on remplace la dernière étape par une sélection entre la présélection ci-dessus et la valeur cible donnée par l'algorithme « Invariant », en opérant comme suit :

• si ladite variation par rapport au temps de G est comprise dans une plage prédéterminée, alors la valeur du glissement optimal $G^{Opt}$ est égale à $G^{Csel\#1}$ ;
• si ladite variation par rapport au temps de G n'est pas comprise dans ladite plage prédéterminée et si la différence $G^{E2}$ en valeur absolue entre $G^{Cinvt}$ et $G^{Csel\#1}$ est comprise dans une plage optimisée prédéterminée, alors la valeur du glissement optimal $G^{Opt}$ est égale à $G^{Cinvt}$ ;
• si ladite variation par rapport au temps de G n'est pas comprise dans ladite plage prédéterminée et si la différence $G^{E2}$ en valeur absolue entre $G^{Cinvt}$ et $G^{Csel\#1}$ n'est pas comprise dans ladite plage optimisée prédéterminée, alors la valeur du glissement optimal $G^{Opt}$ est égale à $G^{Csel\#1}$.

Il est avantageux que ladite plage prédéterminée corresponde aux variations par rapport au temps du glissement G supérieures à un seuil de choix prédéterminé et que ladite plage optimisée prédéterminée corresponde aux variations par rapport au temps du glissement G inférieures à un seuil optimisé $\Delta G^{opt}$. Les seuils de choix et seuils optimisés sont, quant à eux, des paramètres de mise au point du système. Le seuil optimisé peut également être choisi par un processus de logique floue, afin d'être variable et mieux adapté aux circonstances réelles. A titre purement illustratif, on a constaté de bons résultats en fixant le seuil de choix à 300 % par seconde et en fixant le seuil optimisé à 5 %.

On vient de voir que le processus de sélection se passe en deux étapes enchaînées. La première étape fait intervenir l'algorithme « Moyen » et l'algorithme « Mouillé », et la seconde étape fait intervenir l'algorithme « Invariant ». On propose ci-dessous un autre processus pour la première et pour la deuxième étapes.

La sélection du glissement optimal, parmi les valeurs cibles données par les algorithmes « Invariant » et « Moyen », s'opère par exemple de la façon suivante :

• Présélectionner une valeur $G^{Csel\#1}$ de la façon suivante :

⇒ si ladite variation par rapport au temps de G est comprise dans une plage prédéterminée, alors la valeur $G^{Csel\#1}$ est égale à $G^{Cavg}$ ;
⇒ si ladite variation par rapport au temps de G n'est pas comprise dans ladite plage prédéterminée et si la différence $G^{E2}$ en valeur absolue entre $G^{Cinvt}$ et $G^{Cavg}$ est comprise dans une plage optimisée prédéterminée, alors la valeur $G^{Csel\#1}$ est égale à $G^{Cinvt}$ ;
⇒ si ladite variation par rapport au temps de G n'est pas comprise dans ladite plage prédéterminée et si la différence $G^{E2}$ en valeur absolue entre $G^{Cinvt}$ et $G^{Csel\#1}$ n'est pas comprise dans ladite plage optimisée prédéterminée, alors la valeur $G^{Csel\#1}$ est égale à $G^{Cavg}$.

• Prendre $G^{Csel\#1}$ pour sélection finale de la valeur du glissement optimal $G^{Opt}$.

Ensuite, si l'on utilise l'algorithme « Mouillé », on remplace la dernière étape par une sélection entre la présélection ci-dessus et la valeur cible donnée par l'algorithme « Mouillé », en opérant comme suit :

- Calculer l'écart relatif en valeur absolue $G^E$ entre $G^{Csel\#1}$ et $G^{Cwet}$,
- Sélectionner la valeur de $G^{Opt}$ de la façon suivante :

⇒ tant que ladite variation par rapport au temps de G est comprise dans une zone prédéterminée, retenir comme valeur $G^{Opt}$ la valeur de $G^{Csel\#1}$,
⇒ lorsque ladite variation par rapport au temps de G n'est pas comprise dans ladite zone prédéterminée, on détermine une plage critique prédéterminée dont l'amplitude dépend de ladite variation par rapport au temps de G et :

→ si $G^E$ est compris dans ladite plage critique prédéterminée, retenir comme valeur $G^{Opt}$ la valeur de $G^{Csel\#1}$,
→ si $G^E$ n'est pas compris dans ladite plage critique prédéterminée, retenir comme valeur $G^{Opt}$ la valeur de $G^{Cwet}$.

Comme déjà signalé, il est avantageux que les différentes zones et plages soient choisies par rapport à des seuils. Ces seuils sont, quant à eux, des paramètres de mise au point du système. Ils peuvent également être choisis par un processus de logique floue. Notons que ce qui a été dit lors du premier exposé d'un processus de sélection à propos des seuil critique, seuil de choix et seuil optimisé reste valable pour ce second exposé d'un processus de sélection.

*Application à d'autres phénomènes*

Dans la demande de brevet précitée, on a démontré la possibilité d'autres applications de l'algorithme « Invariant », par exemple à l'analyse de la poussée de dérive développée par un pneumatique ou bandage élastique dans une zone de fonctionnement proche de la saturation de la poussée de dérive. C'est en raison de la similarité des lois de variation de ces phénomènes physique. De la même façon, la présente invention a des applications plus larges que la seule comparaison entre les prédictions de différents algorithmes modélisant le coefficient d'adhérence en fonction du glissement. Pour clore le sujet, citons simplement (sans que même cette addition ne soit limitative comme on l'aura compris) que l'invention s'applique aussi à un système de contrôle de la stabilité d'un véhicule visant à prédire la valeur de l'angle de dérive δ d'un pneumatique où la force latérale (dite aussi « poussée de dérive ») est maximale.

Dans ce cas, le paramètre P est l'angle de dérive δ du pneumatique et le paramètre caractéristique Q est la poussée de dérive $F_y$ du pneumatique. Il s'agit de prévoir quand le pneu atteindra son maximum et donc ne sera plus capable de répondre à sa fonction première qui est de permettre au véhicule de tourner, afin de pouvoir maintenir le fonctionnement du pneumatique à une valeur prédéterminée de la poussée de dérive $F_y$, ou pour prévenir le conducteur. Pour maintenir le fonctionnement du pneumatique à une valeur cible prédéterminée, on peut procéder, éventuellement automatiquement, à des interventions préventives de réduction de la vitesse du véhicule pour éviter des situations de conduite critiques (si le véhicule ne tourne pas comme le souhaite le conducteur, il peut en résulter un accident). Pour procéder à bon escient à ces actions, il est là aussi utile de procéder à une sélection entre plusieurs valeurs cibles données par différents algorithmes.

Dans ce cas, l'invention concerne un système comportant des moyens pour contrôler un paramètre « ξ » en fonction des ordres imprimés par le conducteur du véhicule sur son moyen de commande et en fonction des ordres délivrés par un contrôleur de trajectoire des moyens de modulation du paramètre « ξ » et des moyens pour calculer le paramètre angle de dérive $δ^{Opt}$ lors de chaque activation des moyens pour imprimer le paramètre « ξ » de la façon suivante :

- lors de chaque activation du système de commande de variation de ξ, pour au moins deux niveaux « i » différents d'angle de dérive, relever différentes valeurs de $F_{Yi}$ (mesurées ou calculées), et l'angle de dérive associé $δ_i$ obtenue par estimation ou mesure directe,
- utiliser en parallèle « n » algorithmes de calcul déterminant chacun une valeur cible dudit glissement et obtenir ainsi autant de valeurs cibles $δ^{Cn}$ que d'algorithmes utilisés,
- sélectionner comme valeur optimale de l'angle de dérive la meilleure des valeurs cibles $δ^{Cn}$ en soumettant les « n » valeurs cibles $δ^{Cn}$ à des comparaisons visant à éliminer les valeurs cibles les moins vraisemblables.

## Revendications

1. Système de contrôle de la stabilité d'un véhicule, dans lequel un paramètre caractéristique Q du fonctionnement d'un pneumatique du véhicule destiné à rouler sur un sol varie en fonction d'un paramètre P selon une certaine loi, une valeur optimale dudit paramètre P étant imposée par un contrôleur de manière directe ou indirecte de façon à agir sur au moins l'un des éléments choisis dans le groupe comportant le couple de rotation appliqué au pneumatique, l'angle de braquage du pneumatique, l'angle de carrossage du pneumatique et la force verticale appliquée au pneumatique caratérisé en ce que le contrôleur comporte des moyens pour :

- Déterminer des estimations ou des mesures ($P_i$, $Q_i$) pour des niveaux « i » successifs de valeurs ;
- utiliser en parallèle « n » algorithmes de calcul déterminant chacun une valeur cible dudit paramètre et obtenir ainsi autant de valeurs cibles $P^{Cn}$ que d'algorithmes utilisés,
- sélectionner comme valeur optimale du paramètre la meilleure des valeurs cibles $P^{Cn}$ en soumettant les « n » valeurs cibles $P^{Cn}$ à des comparaisons visant à éliminer les valeurs cibles les moins vraisemblables.

2. Système de contrôle de la stabilité d'un véhicule selon la revendication 1, dans lequel le paramètre P est le glissement G du pneumatique et le paramètre caractéristique Q est le coefficient d'adhérence $\mu$ du pneumatique, le système comportant des moyens pour imprimer au pneu un effort longitudinal, des moyens de modulation de l'effort longitudinal et des moyens pour calculer le paramètre glissement $G^{Opt}$ lors de chaque activation des moyens pour imprimer au pneu un effort longitudinal de la façon suivante :

- déterminer les valeurs du coefficient d'adhérence $\mu_i$, pour chaque glissement $G_i$ correspondant à des niveaux « i » successifs de l'effort longitudinal,
- utiliser en parallèle « n » algorithmes de calcul déterminant chacun une valeur cible dudit glissement et obtenir ainsi autant de valeurs cibles $G^{Cn}$ que d'algorithmes utilisés,
- sélectionner comme valeur du glissement optimal $G^{Opt}$ la meilleure des valeurs cibles $G^{Cn}$ en soumettant les « n » valeurs cibles $G^{Cn}$ à des comparaisons visant à éliminer les valeurs cibles les moins vraisemblables.

3. Système de contrôle de la stabilité d'un véhicule selon la revendication 2, dans lequel la sélection du glissement optimal s'opère en procédant aux opérations suivantes pour chaque algorithme de 1 à n :

- Calculer la valeur absolue de l'écart relatif entre la cible $G^{Cn}$ de l'algorithme « n » et la sélection précédente $G^{Csel\#n-1}$,
- Prendre une valeur caractéristique ($\lambda$) du fonctionnement physique de la rotation du pneu sur le sol et utiliser cette valeur caractéristique pour calculer une plage de tolérance sur l'écart calculé précédemment,
- Procéder à la sélection de la façon suivante :

  ⇒ Si l'écart est compris dans la plage de tolérance, sélectionner $G^{Cn}$ comme valeur du glissement optimal $G^{Opt}$,
  ⇒ Si l'écart n'est pas compris dans la plage de tolérance, sélectionner $G^{C\ sel\#n-1}$ comme valeur du glissement optimal $G^{Opt}$.

4. Système de contrôle de la stabilité d'un véhicule selon la revendication 3 dans lequel dans lequel la valeur caractéristique $\lambda$ est la variation par rapport au temps de G.

5. Système suivant la revendication 4 dans lequel les limites de la plage de tolérance sont calculées par un processus choisi dans le groupe contenant la logique floue et la logique booléenne et une fonction mathématique.

6. Système de contrôle de la stabilité d'un véhicule selon l'une des revendications 2 à 5, dans lequel un premier algorithme utilise un Invariant et effectue les opérations suivantes :

- Déterminer la pente $\alpha_i$ de la droite passant par l'origine et par ($G_i$, $\mu_i$),
- Calculer des coefficients $A_p$ par calcul direct ou par une régression appropriée à partir d'un nombre suffisant de paires ($\alpha_i$, $G_i$) de façon à modéliser une courbe de variation $\alpha_i = f(G_i, A_p)$,
- Calculer un premier glissement cible $G^{Cinvt}$ en utilisant un Invariant "Invt" prédéterminé.

7. Système de contrôle de la stabilité d'un véhicule selon la revendication 6, dans lequel on détermine l'Invariant de la façon suivante :

$$\text{Invt} = \frac{\frac{\mu}{G}(G_{max})}{\frac{\mu}{G}(p.G_{max})},$$

avec p ayant une valeur positive et inférieure à 1.

**8.** Système de contrôle de la stabilité d'un véhicule selon la revendication 7, dans lequel on calcule deux coefficients $A_p$ particuliers, A et B, par une régression choisie dans le groupe constitué par une régression linéaire et une régression exponentielle.

**9.** Système de contrôle de la stabilité d'un véhicule selon l'une des revendications 2 à 5, dans lequel un deuxième algorithme effectue les opérations suivantes :

• Déterminer des coefficients $A_{[avg\,/p]}$ par calcul direct ou par une régression appropriée, à partir d'un nombre suffisant de paires $(\mu_i, G_i)$, de façon à modéliser une première courbe de variation $\mu_i = f(G_i, A_{[avg\,/\,p]})$ incluant obligatoirement par convention l'origine, et la ou les paires $(\mu_i, G_i)$, dans lesquelles $\mu_i$ est différent de zéro,
• Déterminer un indicateur de la pente moyenne $\alpha_1$ de ladite première courbe de variation,
• Déterminer des coefficients $B_{[avg/p]}$ par calcul direct ou par une régression appropriée, à partir d'un nombre suffisant de paires $(\mu_i, G_i)$, de façon à modéliser une deuxième courbe de variation $\mu_i = f(G_i, B_{[avg/p]})$ incluant la ou les paires $(\mu_i, G_i)$, dans lesquelles $\mu_i$ est différent de zéro,
• Déterminer un indicateur de la pente moyenne $\alpha_2$ de la deuxième courbe de variation,
• Tant que la différence entre $\alpha_1$ et $\alpha_2$ est inférieure à un seuil de pente prédéterminé, reprendre les opérations précédentes pour chaque nouvelle acquisition de paire de valeurs $(G_i, \mu_i)$,
• Dès que la différence entre $\alpha_1$ et $\alpha_2$ dépasse le seuil de pente prédéterminé, déterminer un glissement cible $G^{Cavg}$ en utilisant au moins la dernière paire de valeurs $(G_i, \mu_i)$.

**10.** Système de contrôle de la stabilité d'un véhicule selon la revendication 9 dans lequel, dès que le glissement $G_i$ dépasse un seuil prédéterminé, on détermine le glissement cible $G^{Cavg}$ en utilisant au moins la dernière paire de valeurs $(G_i, \mu_i)$.

**11.** Système de contrôle de la stabilité d'un véhicule selon la revendication 9 dans lequel :

• La première courbe de variation est une première droite $\mu_i = A_{avg} \cdot G_i$, incluant par convention l'origine, et la ou les paires $(\mu_i, G_i)$, obtenue par une première régression linéaire calculant un premier coefficient $A_{avg}$,
• La deuxième courbe de variation est une deuxième droite $\mu_i = A_{lin} \cdot G_i + B_{lin}$ incluant la ou les paires $(\mu_i, G_i)$, obtenue par une deuxième régression linéaire calculant des coefficients $A_{lin}$ et $B_{lin}$.

**12.** Système de contrôle de la stabilité d'un véhicule selon la revendication 9 ou 11, dans lequel on détermine le glissement cible $G^{Cavg}$ comme étant égal à la dernière valeur $G_i$.

**13.** Système de contrôle de la stabilité d'un véhicule selon la revendication 9 ou 11, dans lequel on détermine le glissement cible $G^{Cavg} = \beta \cdot \dfrac{\mu^{MAX}}{A^{AVG}}$ avec $\beta$ un paramètre de mise au point.

**14.** Système de contrôle de la stabilité d'un véhicule selon la revendication 13 dans lequel $\beta$ vaut environ 1,04.

**15.** Système de contrôle de la stabilité d'un véhicule selon la revendication 13, dans lequel $\beta$ est un paramètre utilisé dans la mise au point du système.

**16.** Système de contrôle de la stabilité d'un véhicule selon l'une des revendications 9 à 15 dans lequel le seuil de pente prédéterminé pour la différence entre $\alpha_1$ et $\alpha_2$ est de l'ordre de 30%.

**17.** Système de contrôle de la stabilité d'un véhicule selon l'une des revendications 2 à 5, dans lequel un troisième algorithme effectue les opérations suivantes :

• Au fur et à mesure de l'acquisition des valeurs de $G_i$, calculer la variation par rapport au temps de G,
• Tant que ladite variation est supérieure à un seuil bas, calculer des coefficients $A_{[wet,p]}$ par calcul direct ou par une régression appropriée de façon à modéliser la variation par rapport au temps de G par une courbe de variation qui est une fonction de $(G_i, A_{[wet,p]})$,
• Dès que ladite variation est supérieure à un seuil haut, déterminer un troisième glissement cible $G^{Cwet}$ en utilisant au moins les dernières valeurs de $A_{[wet,p]}$.

**18.** Système de contrôle de la stabilité d'un véhicule selon la revendication 17, dans lequel on utilise une régression linéaire et on calcule les coefficients $A_{wet}$ et $B_{wet}$ de la façon suivants :

$$\frac{dG}{dt} = A^{WET} \cdot G + B^{WET}$$

et le troisième glissement cible $G^{Cwet}$ est déterminé de la façon suivante :

$$G^{Cwet} = \frac{dG\_tgt - B^{WET}}{A^{WET}}.$$

**19.** Système de contrôle de la stabilité d'un véhicule selon la revendication 18 dans lequel « dG_tgt » vaut 200% par seconde.

**20.** Système de contrôle de la stabilité d'un véhicule selon la revendication 18 dans lequel « dG_tgt » est utilisé comme paramètre de mise au point.

**21.** Système de contrôle de la stabilité d'un véhicule selon l'une des revendications 2 à 20, dans lequel le dispositif de modulation de l'effort longitudinal agit sur la commande de freinage et on initialise (i=0) les opérations indiquées à chaque début de manoeuvre de freinage.

**22.** Système de contrôle de la stabilité d'un véhicule selon l'une des revendication 2 à 20, dans lequel le dispositif de modulation de l'effort longitudinal agit sur le couple moteur aux roues et on initialise (i=0) les opérations indiquées à chaque demande de variation du couple moteur supérieure à un seuil de couple prédéterminé.

**23.** Système de contrôle de la stabilité d'un véhicule selon l'une des revendications 2 à 22, dans lequel on procède, avant toutes les opérations exploitant la courbe de variation de $\mu_i$ en fonction de $G_i$, à une correction du départ de ladite courbe en éliminant les premières paires réelles $(\mu_i, G_i)$ tant que la variation de $\mu_i$ en fonction de $G_i$ n'est pas sensiblement constante et en recherchant le glissement $G_0$ associé à un coefficient d'adhérence nul tel que la paire $(0, G_0)$ et les paires non éliminées $(\mu_i, G_i)$ sont sensiblement alignées, et utilisant une courbe partant de $(0, G_0)$ et rejoignant les paires non éliminées $(\mu_i, G_i)$, de sorte que, pour toute valeur de $G_i$ plus grande que $G_0$, $G_i$ est remplacée par $G_i - G_0$.

**24.** Système de contrôle de la stabilité d'un véhicule selon l'une des revendications 2 à 23 dans lequel, lorsque la variation par rapport au temps du glissement devient supérieure à un seuil de variation prédéterminé, on procède, avant toutes les opérations exploitant la courbe de variation de $\mu_i$ en fonction de $G_i$, à une correction de la fin de ladite courbe en remplaçant les valeurs de $\mu_i$ correspondant à des glissements amenant la variation par rapport au temps du glissement au-delà dudit seuil de variation prédéterminé, par des valeurs corrigées comme suit :

$$\mu_i{}^{Corr} = \mu_i{}^{acquis} \cdot \left[ Max\left(\frac{dG}{dt};1\right) \right]^{-ACorr}$$

où « Acorr » est un paramètre prédéterminé.

**25.** Système de contrôle de la stabilité d'un véhicule selon la revendication 24, dans lequel « Acorr » vaut environ 0,2.

**26.** Système de contrôle de la stabilité d'un véhicule selon la revendication 25 dans lequel « Acorr » est utilisé comme paramètre de mise au point.

**27.** Système de contrôle de la stabilité d'un véhicule utilisant à la fois les algorithmes de l'une des revendications 9 à 16 et de l'une des revendications 17 à 20, dans lequel la sélection du glissement optimal s'opère de la façon suivante :

   • Calculer l'écart relatif en valeur absolue $G^E$ entre $G^{Cavg}$ et $G^{Cwet}$,
   • Présélectionner une valeur $G^{Csel\#1}$ de la façon suivante :

   tant que ladite variation par rapport au temps de G est comprise dans une zone prédéterminée, retenir comme valeur $G^{Csel\#1}$ la valeur de $G^{Cavg}$,
   lorsque ladite variation par rapport au temps de G n'est pas comprise dans ladite zone prédéterminée, on détermine une plage critique prédéterminée dont l'amplitude dépend de ladite variation par rapport au temps de G et :

   → si $G^E$ est compris dans ladite plage critique prédéterminée, retenir comme valeur $G^{Csel\#1}$ la valeur de $G^{Cavg}$,
   → si $G^E$ n'est pas compris dans ladite plage critique prédéterminée, retenir comme valeur $G^{Csel\#1}$ la valeur de $G^{Cwet}$,

   • prendre comme sélection finale de la valeur du glissement optimal $G^{Opt}$ la valeur $G^{Csel\#1}$.

**28.** Système de contrôle de la stabilité d'un véhicule selon la revendication 27, dans lequel ladite zone prédéterminée correspond aux variations par rapport au temps du glissement G inférieures à une limite basse, et ladite plage critique prédéterminée correspond aux variations par rapport au temps du glissement G supérieures à un premier seuil critique $\Delta G^{max}$.

**29.** Système de contrôle de la stabilité d'un véhicule selon la revendication 27 ou 28 utilisant en outre l'algorithme de l'une des revendications 6 à 8, dans lequel la sélection finale est remplacée par les étapes suivantes :

   • si ladite variation par rapport au temps de G est comprise dans une plage prédéterminée, alors la valeur du glissement optimal $G^{Opt}$ est égale à $G^{Csel\#1}$ ;
   • si ladite variation par rapport au temps de G n'est pas comprise dans ladite plage prédéterminée, et si la différence $G^{E2}$ en valeur absolue entre $G^{Cinvt}$ et $G^{Csel\#1}$ est comprise dans une plage optimisée prédéterminée, alors la valeur du glissement optimal $G^{Opt}$ est égale à $G^{Cinvt}$;
   • si ladite variation par rapport au temps de G n'est pas comprise dans ladite plage prédéterminée et si la différence $G^{E2}$ en valeur absolue entre $G^{Cinvt}$ et $G^{Csel\#1}$ n'est pas comprise dans ladite plage optimisée prédéterminée, alors la valeur du glissement optimal $G^{Opt}$ est égale à $G^{Csel\#1}$.

**30.** Système de contrôle de la stabilité d'un véhicule selon la revendication 29 dans lequel ladite plage prédéterminée correspond aux variations par rapport au temps du glissement G supérieures à un seuil de choix prédéterminé et ladite plage optimisée prédéterminée correspond aux variations par rapport au temps du glissement G inférieures à un seuil optimisé $\Delta G^{opt}$.

**31.** Système de contrôle de la stabilité d'un véhicule selon la revendication 30 dans lequel les seuils critique et optimisé sont calculés par un processus choisi dans le groupe contenant la logique floue et la logique booléenne et une fonction mathématique.

**32.** Système de contrôle de la stabilité d'un véhicule selon la revendication 30 dans lequel la limite basse, le seuil critique, le seuil de choix et le seuil optimisé sont des paramètres de mise au point.

**33.** Système de contrôle de la stabilité d'un véhicule utilisant à la fois les algorithmes de l'une des revendications 6 à 8 et de l'une des revendications 9 à 16, dans lequel la sélection du glissement optimal s'opère de la façon suivante :

• Présélectionner une valeur $G^{Csel\#1}$ de la façon suivante :

si ladite variation par rapport au temps de G est comprise dans une plage prédéterminée, alors la valeur $G^{Csel\#1}$ est égale à $G^{Cavg}$;

si ladite variation par rapport au temps de G n'est pas comprise dans ladite plage prédéterminée et si la différence $G^{E2}$ en valeur absolue entre $G^{Cinvt}$ et $G^{Cavg}$ est comprise dans une plage optimisée prédéterminée, alors la valeur $G^{Csel\#1}$ est égale à $G^{Cinvt}$;

si ladite variation par rapport au temps de G n'est pas comprise dans ladite plage prédéterminée et si la différence $G^{E2}$ en valeur absolue entre $G^{Cinvt}$ et $G^{Csel\#1}$ n'est pas comprise dans ladite plage optimisée prédéterminée, alors la valeur $G^{Csel\#1}$ est égale à $G^{Cavg}$.

• Prendre $G^{Csel\#1}$ pour sélection finale de la valeur du glissement optimal $G^{Opt}$.

**34.** Système de contrôle de la stabilité d'un véhicule selon la revendication 33 dans lequel ladite plage prédéterminée correspond aux variations par rapport au temps du glissement G supérieures à un seuil de choix prédéterminé et ladite plage optimisée prédéterminée correspond aux variations par rapport au temps du glissement G inférieures à un seuil optimisé $\Delta G^{opt}$.

**35.** Système de contrôle de la stabilité d'un véhicule selon la revendication 33 ou 34 utilisant en outre l'algorithme de l'une des revendications 17 à 19, dans lequel la sélection finale est remplacée par les étapes suivantes :

• Calculer l'écart relatif en valeur absolue $G^E$ entre $G^{Csel\#1}$ et $G^{Cwet}$,
• Sélectionner la valeur de $G^{Opt}$ de la façon suivante :

⇒ tant que ladite variation par rapport au temps de G est comprise dans une zone prédéterminée, retenir comme valeur $G^{Opt}$ la valeur de $G^{Csel\#1}$,
⇒ lorsque ladite variation par rapport au temps de G n'est pas comprise dans ladite zone prédéterminée, on détermine une plage critique prédéterminée dont la valeur dépend de ladite variation par rapport au temps de G et :

→ si $G^E$ est compris dans ladite plage critique prédéterminée, retenir comme valeur $G^{Opt}$ la valeur de $G^{Csel\#1}$,
→ si $G^E$ n'est pas compris dans ladite plage critique prédéterminée, retenir comme valeur $G^{Opt}$ la valeur de $G^{Cwet}$.

**36.** Système de contrôle de la stabilité d'un véhicule selon la revendication 35 dans lequel ladite zone prédéterminée correspond aux variations par rapport au temps du glissement G inférieures à une limite basse et ladite plage critique prédéterminée correspond aux variations par rapport au temps du glissement G supérieures à un premier seuil critique $\Delta G^{max}$.

**37.** Système de contrôle de la stabilité d'un véhicule selon la revendication 36 dans lequel les seuils critique et optimisé sont calculés par un processus choisi dans le groupe contenant la logique floue et la logique booléenne et une fonction mathématique.

**38.** Système de contrôle de la stabilité d'un véhicule selon la revendication 36 dans lequel la limite basse, le seuil critique, le seuil de choix et le seuil optimisé sont des paramètres de mise au point.

**39.** Système de contrôle de la stabilité d'un véhicule selon la revendication 1, dans lequel le paramètre P est l'angle de dérive $\delta$ du pneumatique et le paramètre caractéristique Q est la poussée de dérive $F_y$ du pneumatique, le système comportant des moyens pour contrôler un paramètre « $\xi$ » en fonction des ordres imprimés par le conducteur du véhicule sur son moyen de commande et en fonction des ordres délivrés par un contrôleur de trajectoire, des moyens de modulation du paramètre « $\xi$ » et des moyens pour calculer le paramètre angle de dérive $\delta^{Opt}$ lors de chaque activation des moyens pour imprimer le paramètre « ξ » de la façon suivante :

• lors de chaque activation du système de commande de variation de ξ, pour au moins deux niveaux « i » différents d'angle de dérive, relever différentes valeurs de $F_{Yi}$, et l'angle de dérive associé $\delta_i$ obtenue par estimation ou mesure directe,
• utiliser en parallèle « n » algorithmes de calcul déterminant chacun une valeur cible dudit glissement et obtenir ainsi autant de valeurs cibles $\delta^{Cn}$ que d'algorithmes utilisés,
• sélectionner comme valeur optimale de l'angle de dérive la meilleure des valeurs cibles $\delta^{Cn}$ en soumettant les « n » valeurs cibles $\delta^{Cn}$ à des comparaisons visant à éliminer les valeurs cibles les moins vraisemblables.

**Claims**

1. Vehicle stability control system in which a characteristic parameter Q of the functioning of a tyre of the vehicle intended to travel on a type of ground varies as a function of a parameter P according to a certain law, an optimum value of the said parameter P being imposed by a controller directly or indirectly so as to act on at least one of the elements chosen from the group comprising the rotation torque applied to the tyre, the steering angle of the tyre, the camber angle of the tyre and the vertical force applied to the tyre, **characterised in that** the controller comprises means for:

   • determining estimations or measurements ($P_i$, $Q_i$) for successive levels "i" of values;
   • using in parallel "n" calculation algorithms each determining a target value for the said parameter and thus obtaining as many target values $P^{Cn}$ as there are algorithms used,
   • selecting as the optimum value of the parameter the best of the target values $P^{Cn}$ by subjecting the "n" target values $P^{Cn}$ to comparisons aimed at eliminating the least likely target values.

2. Vehicle stability control system according to Claim 1, in which the parameter P is the slip G on the tyre and the characteristic parameter Q is the coefficient of adhesion μ of the tyre, the system comprising means for imparting a longitudinal force to the tyre, means of modulating the longitudinal force and means for calculating the slip parameter $G^{Opt}$ at each activation of the means for imparting a longitudinal force to the tyre in the following manner:

   • determining the values of the coefficient of adhesion $\mu_i$, for each slip $G_i$ corresponding to successive levels "i" of the longitudinal force,
   • using in parallel "n" calculation algorithms each determining a target value for the said slip and thus obtaining as many target values $G^{Cn}$ as there are algorithms used,
   • selecting as the optimum slip value $G^{Opt}$ the best of the target values $G^{Cn}$ by subjecting the "n" target values $G^{Cn}$ to comparisons aimed at eliminating the least likely target values.

3. Vehicle stability control system according to Claim 2, in which the selection of the optimum slip is made by proceeding with the following operations for each algorithm from 1 to n:

   • calculating the absolute value of the relative difference between the target $G^{Cn}$ of the algorithm "n" and the previous selection $G^{Csel\#n-1}$,
   • taking a characteristic value (λ) of the physical functioning of the rotation of the tyre on the ground and using this characteristic value for calculating a tolerance range on the previously calculated difference,
   • proceeding with the selection in the following fashion:

      ⇒ if the difference lies within the tolerance range, selecting $G^{Cn}$ as the value of the optimum slip $G^{Opt}$,
      ⇒ if the difference does not lie within the tolerance range, selecting $G^{Csel\#n-1}$ as the value of the optimum slip $G^{Opt}$.

4. Vehicle stability control system according to Claim 3, in which the characteristic value λ is the variation in G with respect to time.

5. System according to Claim 4, in which the limits of the tolerance range are calculated by a process chosen from a group containing fuzzy logic and Boolean logic and a mathematical function.

6. Vehicle stability control system according to one of Claims 2 to 5, in which a first algorithm uses an Invariant and performs the following operations:

- determining the slope $\alpha_i$ of the straight line passing through the origin and through $(G_i, \mu_i)$,
- calculating coefficients $A_{.P.}$ by direct calculation or by an appropriate regression from a sufficient number of pairs $(\alpha_i, G_i)$ so as to model a variation curve $\alpha_i = f(G_i, A_{.P.})$,
- calculating a first target slip $G^{Cinvt}$ using a predetermined Invariant "Invt".

**7.** Vehicle stability control system according to Claim 6, in which the Invariant is determined in the following fashion:

$$\text{Invt} = \frac{\dfrac{\mu}{G}(G_{max})}{\dfrac{\mu}{G}(p.G_{max})},$$

with p having a positive value less than 1.

**8.** Vehicle stability control system according to Claim 7, in which two special $A_p$ coefficients, A and B, are calculated by a regression chosen from the group consisting of a linear regression and an exponential regression.

**9.** Vehicle stability control system according to one of Claims 2 to 5, in which a second algorithm performs the following operations:

- determining coefficients $A_{[avg / p]}$ by direct calculation or by an appropriate regression, from a sufficient number of pairs $(\mu_i, G_i)$, so as to model a first variation curve $\mu_i = f(G_i, A_{[avg / p]})$ necessarily including by convention the origin, and the pair or pairs $(\mu_i, G_i)$, in which $\mu_i$ is different from zero,
- determining an indicator of the average slope $\alpha_1$ of the said first variation curve,
- determining coefficients $B_{[avg / p]}$ by direct calculation or by an appropriate regression, from a sufficient number of pairs $(\mu_i, G_i)$, so as to model a second variation curve $\mu_i = f(G_i, B_{[avg / p]})$ including the pair or pairs $(\mu_i, G_i)$, in which $\mu_i$ is different from zero,
- determining an indicator of the average slope $\alpha_2$ of the second variation curve,
- as long as the difference between $\alpha_1$ and $\alpha_2$ is less than a predetermined slope threshold, repeating the previous operations for each new acquisition of a pair of values $(G_i, \mu_i)$,
- as soon as the difference between $\alpha_1$ and $\alpha_2$ exceeds the predetermined slope threshold, determining a target slip $G^{Cavg}$ using at least the last pair of values $(G_i, \mu_i)$.

**10.** Vehicle stability control system according to Claim 9, in which, as soon as the slip $G_i$ exceeds a predetermined threshold, the target slip $G^{Cavg}$ is determined using at least the last pair of values $(G_i, \mu_i)$.

**11.** Vehicle stability control system according to Claim 9, in which:

- the first variation curve is a first straight line $\mu_i = A_{avg} \cdot G_i$, including by convention the origin, and the pair or pairs $(\mu_i, G_i)$, obtained by a first linear regression calculating a first coefficient $A_{avg}$,
- the second variation curve is a second straight line $\mu_i = A_{lin} \cdot G_i + B_{lin}$ including the pair or pairs $(\mu_i, G_i)$, obtained by a second linear regression calculating coefficients $A_{lin}$ and $B_{lin}$.

**12.** Vehicle stability control system according to Claim 9 or 11, in which the target slip $G^{Cavg}$ is determined as being equal to the last value $G_i$.

**13.** Vehicle stability control system according to Claim 9 or 11, in which the target slip

$$G^{Cavg} = \beta \cdot \frac{\mu^{MAX}}{A^{AVG}}$$

with β a fine-tuning parameter is determined.

14. Vehicle stability control system according to Claim 13, in which β is equal to approximately 1.04.

15. Vehicle stability control system according to Claim 13, in which β is a parameter used in the fine tuning of the system.

16. Vehicle stability control system according to one of Claims 9 to 15, in which the slope threshold predetermined for the difference between $\alpha_1$ and $\alpha_2$ is around 30%.

17. Vehicle stability control system according to one of Claims 2 to 5, in which a third algorithm performs the following operations:

   • as the values of $G_i$ are acquired, calculating the variation in G with respect to time,
   • as long as the said variation is above a low threshold, calculating coefficients $A_{[wet,p]}$ by direct calculation or by an appropriate regression so as to model the variation with respect to time of G by a variation curve which is a function of ($G_i$, $A_{[wet,p]}$),
   • as soon as the said variation is above a high threshold, determining a third target slip $G^{Cwet}$ using at least the last values of $A_{[wet,p]}$.

18. Vehicle stability control system according to Claim 17, in which a linear regression is used and the coefficients $A_{wet}$ and $B_{wet}$ are calculated in the following fashion:

   •

$$\frac{dG}{dt} = A^{WET} \cdot G + B^{WET}$$

and the third target slip $G^{Cwet}$ is determined in the following fashion:

   •

$$G^{Cwet} = \frac{dG\_tgt - B^{WET}}{A^{WET}} .$$

19. Vehicle stability control system according to Claim 18, in which "dG_tgt" is equal to 200% per second.

20. Vehicle stability control system according to Claim 18, in which "dG_tgt" is used as a fine-tuning parameter.

21. Vehicle stability control system according to one of Claims 2 to 20, in which the device for modulating the longitudinal force acts on the braking control and the operations indicated at each start of a braking manoeuvre are initialised (i=0).

22. Vehicle stability control system according to one of Claims 2 to 20, in which the device modulating the longitudinal force acts on the driving torque at the wheels and the operations indicated are initialised (i=0) at each request for a variation in the driving torque above a predetermined torque threshold.

23. Vehicle stability control system according to one of Claims 2 to 22, in which, before all the operations using the curve of variation of $\mu_i$ as a function of $G_i$, a correction of the start of the said curve is carried out by eliminating the first real pairs ($\mu_i$, $G_i$) as long as the variation in $\mu_i$ as a function of $G_i$ is not substantially constant and by seeking the slip $G_0$ associated with a zero coefficient of adhesion such that the pair (0, $G_0$) and the non-eliminated pairs ($\mu_i$, $G_i$) are substantially aligned, and using a curve starting from (0, $G_0$) and joining the non-eliminated pairs ($\mu_i$, $G_i$), so that, for any value of $G_i$ greater than $G_0$, $G_i$ is replaced by $G_i$ - $G_0$.

24. Vehicle stability control system according to one of Claims 2 to 23, in which, when the variation in the slip with respect to time becomes greater than a predetermined variation threshold, a correction to the end of the said curve is carried out, before all the operations using the curve of variation of $\mu_i$ as a function of $G_i$, by replacing the values of $\mu_i$ corresponding to slips bringing the variation in the slip with respect to time beyond the said predetermined variation threshold, by corrected values as follows:

$$\mu_i^{Corr} = \mu_i^{acquired} \cdot \left[ Max\left( \frac{dG}{dt} ; 1 \right) \right]^{-ACorr}$$

where "Acorr" is a predetermined parameter.

25. Vehicle stability control system according to Claim 24, in which "Acorr" is equal to approximately 0.2.

26. Vehicle stability control system according to Claim 25, in which "Acorr" is used as a fine-tuning parameter.

27. Vehicle stability control system using at the same time the algorithms of one of Claims 9 to 16 and one of Claims 17 to 20, in which the selection of the optimum slip is made in the following fashion:

   • calculating the relative difference in absolute value $G^E$ between $G^{Cavg}$ and $G^{Cwet}$,
   • preselecting a value $G^{Csel\#1}$ in the following fashion:

      ⇒ as long as the said variation in G with respect to time is within a predetermined zone, adopting, as the value $G^{Csel\#1}$, the value of $G^{Cavg}$,
      ⇒ when the said variation in G with respect to time does not lie within the said predetermined zone, a predetermined critical range is determined whose amplitude depends on the said variation in G with respect to time, and:

         → if $G^E$ lies within the said predetermined critical range, adopting, as the value $G^{Csel\#1}$, the value of $G^{Cavg}$,
         → if $G^E$ does not lie within the said predetermined critical range, adopting, as the value $G^{Csel\#1}$, the value of $G^{Cwet}$,

   • taking the value $G^{Csel\#1}$ as the final selection of the value of the optimum slip $G^{Opt}$.

28. Vehicle stability control system according to Claim 27, in which the said predetermined zone corresponds to the variations in the slip G with respect to time below a lower limit, and the said predetermined critical range corresponds to the variations in the slip G with respect to time above a first critical threshold $\Delta G^{max}$.

29. Vehicle stability control system according to Claim 27 or 28 also using the algorithm of one of Claims 6 to 8, in which the final selection is replaced by the following steps:

   • if the said variation in G with respect to time lies within a predetermined range, then the value of the optimum slip $G^{Opt}$ is equal to $G^{Csel\#1}$;
   • if the said variation in G with respect to time does not lie within the said predetermined range and if the difference $G^{E2}$ in absolute value between $G^{Cinvt}$ and $G^{Csel\#1}$ lies within a predetermined optimised range, then the value of the optimum slip $G^{Opt}$ is equal to $G^{Cinvt}$;
   • if the said variation in G with respect to time does not lie within the said predetermined range and if the difference $G^{E2}$ in absolute value between $G^{Cinvt}$ and $G^{Csel\#1}$ does not lie within the said predetermined optimised range, then the value of the optimum slip $G^{Opt}$ is equal to $G^{Csel\#1}$.

30. Vehicle stability control system according to Claim 29, in which the said predetermined range corresponds to the variations in the slip G with respect to time greater than a predetermined threshold of choice and the said predetermined optimised range corresponds to the variations in the slip G with respect to time below an optimised threshold $\Delta G^{opt}$.

31. Vehicle stability control system according to Claim 30, in which the critical and optimised thresholds are calculated by a process chosen from the group containing fuzzy logic and Boolean logic and a mathematical function.

32. Vehicle stability control system according to Claim 30, in which the low limit, the critical threshold, the threshold of choice and the optimised threshold are fine-tuning parameters.

33. Vehicle stability control system using at the same time the algorithms of one of Claims 6 to 8 and of one of Claims 9 to 16, in which the selection of the optimum slip is made in the following fashion:

   • preselecting a value $G^{Csel\#1}$ in the following fashion:

   $\Rightarrow$ if the said variation in G with respect to time lies within a predetermined range, then the value $G^{Csel\#1}$ is equal to $G^{Cavg}$;
   $\Rightarrow$ if the said variation in G with respect to time does not lie within the said predetermined range and if the difference $G^{E2}$ in absolute value between $G^{Cinvt}$ and $G^{Cavg}$ lies within a predetermined optimised range, then the value $G^{Csel\#1}$ is equal to $G^{Cinvt}$;
   $\Rightarrow$ if the said variation in G with respect to time does not lie within the said predetermined range and if the difference $G^{E2}$ in absolute value between $G^{Cinvt}$ and $G^{Csel\#1}$ does not lie within the said predetermined optimised range, then the value $G^{Csel\#1}$ is equal to $G^{Cavg}$;

   • taking $G^{Csel\#1}$ for the final selection of the value of the optimum slip $G^{Opt}$.

34. Vehicle stability control system according to Claim 33, in which the said predetermined range corresponds to the variations in the slip G with respect to time greater than a predetermined threshold of choice and the said predetermined optimised range corresponds to the variations in the slip G with respect to time less than an optimised threshold $\Delta G^{opt}$.

35. Vehicle stability control system according to Claim 33 or 34, also using the algorithm of one of Claims 17 to 19, in which the final selection is replaced by the following steps:

   • calculating the relative difference in absolute value $G^E$ between $G^{Csel\#1}$ and $G^{Cwet}$,
   • selecting the value of $G^{Opt}$ in the following fashion:

   $\Rightarrow$ as long as the said variation in G with respect to time lies within a predetermined zone, adopting, as the value $G^{Opt}$, the value of $G^{Csel\#1}$,
   $\Rightarrow$ when the said variation in G with respect to time does not lie within the said predetermined zone, a predetermined critical range is determined whose amplitude depends on the said variation in G with respect to time, and:

   $\rightarrow$ if $G^E$ lies within the said predetermined critical range, adopting, as the value $G^{Opt}$, the value of $G^{Csel\#1}$,
   $\rightarrow$ if $G^E$ does not lie within the said predetermined critical range, adopting, as the value $G^{Opt}$, the value of $G^{Cwet}$.

36. Vehicle stability control system according to Claim 35, in which the said predetermined zone corresponds to the variations in the slip G with respect to time below a low limit and the said predetermined critical range corresponds to the variations in the slip G with respect to time greater than a first critical threshold $\Delta G^{max}$.

37. Vehicle stability control system according to Claim 36, in which the critical and optimised thresholds are calculated by a process chosen from the group containing fuzzy logic and Boolean logic and a mathematical function.

38. Vehicle stability control system according to Claim 36, in which the low limit, the critical threshold, the threshold of choice and the optimised threshold are fine-tuning parameters.

39. Vehicle stability control system according to Claim 1, in which the parameter P is the drift angle $\delta$ of the tyre and the characteristic parameter Q is the drift thrust $F_y$ of the tyre, the system comprising means for controlling a parameter "$\xi$" according to instructions entered by the driver of the vehicle on his control means and according to instructions delivered by a path controller, means of modulating the parameter "$\xi$" and means for calculating the drift angle parameter $\delta^{Opt}$ at each activation of the means for entering the parameter "$\xi$" in the following fashion:

• each time the system for controlling a variation in $\xi$ is activated, for at least two different levels "i" of the drift angle, reading various values of $F_{Y_i}$, and the associated drift angle $\delta_i$ obtained by estimation or direct measurement,
• using in parallel "n" calculation algorithms each determining a target value of the said slip and thus obtaining as many target values $\delta^{Cn}$ as there are algorithms used,
• selecting, as the optimum value of the drift angle, the best of the target values $\delta^{Cn}$ by subjecting the "n" target values $\delta^{Cn}$ to comparisons aimed at eliminating the least likely target values.

**Patentansprüche**

1. System zur Stabilitätsregelung eines Fahrzeugs, bei dem ein charakteristischer Parameter Q für die Funktion eines Reifens eines Fahrzeugs zum Abrollen auf einem Boden sich gemäß einer bestimmten Gesetzmäßigkeit in Abhängigkeit von einem Parameter P ändert, wobei ein optimaler Wert des Parameters P durch einen Controller direkt oder indirekt vorgegeben wird, um auf wenigstens eines der Elemente aus der Gruppe einzuwirken, die umfasst: auf den Reifen wirkendes Drehmoment, Einschlagwinkel des Reifens, Radsturzwinkel des Reifens und vertikal auf den Reifen wirkende Kraft,
**dadurch gekennzeichnet, dass** der Controller Einrichtungen umfasst zum:

• Bestimmen von Abschätzungen oder Messwerten ($P_i$, $Q_i$) für die aufeinander folgenden Werteindizes "i";
• Durchführen von "n" Berechnungs-Algorithmen parallel zueinander zum Bestimmen jeweils eines Zielwertes für den Parameter und somit Erzeugen von soviel Zielwerten $P^{Cn}$ wie Algorithmen durchgeführt werden;
• Auswählen des besten Zielwertes $P^{Cn}$ als optimalen Parameterwert durch Vergleichen von "n" Zielwerten $P^{Cn}$, um diejenigen Zielwerte zu eliminieren, die am wenigsten wahrscheinlich sind.

2. System zur Stabilitätsregelung eines Fahrzeugs nach Anspruch 1, bei dem der Parameter P der Schlupf G des Reifens ist und der charakteristische Parameter Q der Reibungskoeffizient $\mu$ des Reifens ist, wobei das System Einrichtungen umfasst, um dem Reifen eine Längskraft vorzugeben, Einrichtungen zum Modulieren der Längskraft und Einrichtungen, um bei jeder Aktivierung der Einrichtungen, mit denen dem Reifen eine longitudinale Kraft vorgegeben wird, den Schlupfparameter $G^{Opt}$ auf folgende Art und Weise zu berechnen:

• Bestimmen von Werten für den Reibungskoeffizienten $\mu_i$ für jeden Schlupf $G_i$ entsprechend den aufeinander folgenden Werteindizes "i" für die Längskraft;
• Durchführen von "n" Berechnungs-Algorithmen parallel zueinander zum Bestimmen jeweils eines Zielwertes des Schlupfes und somit Erzeugen von soviel Zielwerten $G^{Cn}$ wie Algorithmen durchgeführt werden;
• Auswählen des besten Zielwertes $G^{Cn}$ als optimalen Schlupfwert $G^{Opt}$ durch Vergleichen von "n" Zielwerten $G^{Cn}$, um diejenigen Zielwerte zu eliminieren, die am wenigsten wahrscheinlich sind.

3. System zur Stabilitätsregelung eines Fahrzeugs nach Anspruch 2, bei dem die Auswahl des optimalen Schlupfes erfolgt, indem die folgenden Operationen bei jedem Algorithmus zwischen 1 und n durchgeführt werden:

• Berechnen des Absolutwertes des relativen Abstandes zwischen dem Zielwert $G^{Cn}$ des Algorithmus "n" und der vorangehenden Auswahl $G^{Csel\#n-1}$,
• Verwenden eines charakteristischen Wertes ($\lambda$) der physikalischen Funktion der Drehung des Reifens auf dem Boden und Verwenden dieses charakteristischen Wertes zum Berechnen eines Toleranzbereiches für den vorher berechneten Abstand,
• Fortfahren mit der Auswahl auf folgende Art:

$\Rightarrow$ Wenn der Abstand im Toleranzbereich liegt, Auswählen von $G^{Cn}$ als Wert für den optimalen Schlupf $G^{Opt}$,
$\Rightarrow$ wenn der Abstand nicht in dem Toleranzbereich liegt, Auswählen von $G^{Csel\#n-1}$ als Wert für den optimalen Schlupf $G^{Opt}$.

4. System zur Stabilitätsregelung eines Fahrzeugs nach Anspruch 3, bei dem der charakteristische Wert $\lambda$ die Änderung von G bezüglich der Zeit ist.

5. System nach Anspruch 4, bei dem die Grenzwerte des Toleranzbereiches berechnet werden durch einen Prozess, der ausgewählt wird aus einer Gruppe, die die unscharfe Logik und die Boolesche Logik und eine mathematische Funktion enthält.

**6.** System zur Stabilitätsregelung eines Fahrzeugs nach einem der Ansprüche 2 bis 5, bei dem ein erster Algorithmus auf eine Invariante zurückgreift und die folgenden Operationen durchführt:

• Bestimmen der Steigung $\alpha_i$ der Gerade, die durch den Ursprung und durch $(G_i, \mu_i)$ verläuft,
• Berechnen der Koeffizienten Ap durch direkte Berechnung oder durch eine geeignete Regression, bei der man von einer ausreichenden Anzahl von Paaren $(\alpha_1, G_i)$ ausgeht, um eine Änderungskurve $\alpha_i = f(G_i, A_p)$ zu erzeugen,
• Berechnen eines ersten Zielwertes $G^{Cinvt}$ für den Schlupf unter Verwendung einer vorgegebenen Invariante "Invt".

**7.** System zur Stabilitätsregelung eines Fahrzeugs nach Anspruch 6, bei dem man die Invariante auf folgende Art und Weise bestimmt:

$$Invt = \frac{\dfrac{\mu}{G}(G_{\max})}{\dfrac{\mu}{G}(p.G_{\max})},$$

wobei p einen positiven Wert kleiner als 1 annimmt.

**8.** System zur Stabilitätsregelung eines Fahrzeugs nach Anspruch 7, bei dem man zwei spezielle Koeffizienten Ap, A und B, durch eine Regression aus der Gruppe bestimmt, die eine lineare Regression und eine exponentielle Regression umfasst.

**9.** System zur Stabilitätsregelung eines Fahrzeugs nach einem der Ansprüche 2 bis 5, bei dem ein zweiter Algorithmus die folgenden Operationen durchführt:

• Bestimmen der Koeffizienten $A_{[avg/p]}$ durch direkte Berechnung oder durch eine geeignete Regression, bei der man von einer ausreichenden Anzahl von Paaren $(\mu_i, G_i)$ ausgeht, um eine erste Änderungskurve $\mu_i = f(G_i, A_{[avg/p]})$ zu erzeugen, die zwingend durch den Ursprung und das oder die Paare $(\mu_i, G_i)$ verläuft, bei denen $\mu_i$ ungleich null ist,
• Bestimmen eines Indikators für die mittlere Steigung $\alpha_1$ der ersten Änderungskurve,
• Bestimmen der Koeffizienten $B_{[avg/p]}$ durch direkte Berechnung oder durch eine geeignete Regression, bei der man von einer ausreichenden Anzahl von Paaren $(\mu_i, G_i)$ ausgeht, um eine zweite Änderungskurve $\mu_i = f(G_i, B_{[avg/p]})$ durch das oder die Paare $(\mu_i, G_i)$ zu erzeugen, bei denen $\mu_i$ ungleich null ist,
• Bestimmen eines Indikators für die mittlere Steigung $\alpha_2$ der zweiten Änderungskurve,
• solange die Differenz zwischen $\alpha_1$ und $\alpha_2$ kleiner als ein vorgegebener Schwellenwert für die Steigung ist, Wiederaufnahme der vorangehenden Operationen bei jeder neuen Erfassung von Wertepaaren $(G_i, \mu_i)$,
• sobald die Differenz zwischen $\alpha_1$ und $\alpha_2$ den vorgegebenen Schwellenwert für die Steigung übersteigt, Bestimmen eines Zielwertes für den Schlupf $G^{Cavg}$ unter Verwendung wenigstens des letzten Wertepaares $(G_i, \mu_i)$.

**10.** System zur Stabilitätsregelung eines Fahrzeugs nach Anspruch 9, bei dem bei Überschreiten eines vorgegebenen Schwellenwertes durch den Schlupf $G_i$ der Zielwert $G^{Cavg}$ für den Schlupf unter Verwendung wenigstens des letzten Paares der Werte $(G_i, \mu_i)$ festgelegt wird.

**11.** System zur Stabilitätsregelung eines Fahrzeugs nach Anspruch 9, bei dem:

• die erste Änderungskurve eine erste Gerade $\mu_i = A_{avg} \cdot G_i$ ist, die zwingend durch den Ursprung und das oder die Paare $(\mu_i, G_i)$ verläuft, die man durch eine erste lineare Regression erhält, wobei man einen ersten Koeffizienten $A_{avg}$ berechnet,
• die zweite Änderungskurve eine zweite Gerade $\mu_i = A_{lin} \cdot G_i + B_{lin}$, die durch das oder die Paare $(\mu_i, G_i)$ verläuft, die man durch eine zweite lineare Regression erhält, wobei man die Koeffizienten $A_{lin}$ und $B_{lin}$ berechnet.

**12.** System zur Stabilitätsregelung eines Fahrzeugs nach einem der Ansprüche 9 bis 11, bei dem der Zielwert für den Schlupf $G^{Cavg}$ bestimmt wird, so dass er gleich dem letzten Wert $G_i$ ist.

**13.** System zur Stabilitätsregelung eines Fahrzeugs nach einem der Ansprüche 9 bis 11, bei dem der Zielwert für den Schlupf $G^{Cavg} = \beta \bullet \dfrac{\mu^{MAX}}{A^{AVG}}$ bestimmt wird, wobei β ein Anpassungsparameter ist.

**14.** System zur Stabilitätsregelung eines Fahrzeugs nach Anspruch 13, bei dem β einen Wert von etwa 1,04 einnimmt.

**15.** System zur Stabilitätsregelung eines Fahrzeugs nach Anspruch 13, bei dem β ein Anpassungsparameter ist, der für die Anpassung des Systems verwendet wird.

**16.** System zur Stabilitätsregelung eines Fahrzeugs nach einem der Ansprüche 9 bis 15, bei dem der vorgegebene Schwellenwert für die Steigung für die Differenz zwischen $\alpha_1$ und $\alpha_2$ in der Größenordnung von 30 % liegt.

**17.** System zur Stabilitätsregelung eines Fahrzeugs nach einem der Ansprüche 2 bis 5, bei dem durch einen dritten Algorithmus die folgenden Operationen durchgeführt werden:

• Berechnen der Änderung von G in Bezug auf die Zeit je nach Erfassung der Werte $G_i$,
• solange die Änderung größer als eine untere Schwelle ist, Berechnen von Koeffizienten $A_{[wet,\,p]}$ durch direkte Berechnung oder durch eine geeignete Regression, um die Änderung von G in Bezug auf die Zeit durch eine Änderungskurve zu erzeugen, die eine Funktion von $(G_i, A_{[wet,p]})$ ist,
• sobald die Änderung größer ist als eine obere Schwelle, Bestimmen eines Zielwertes für den Schlupf $G^{Cwet}$ unter Verwendung wenigstens der letzten Werte von $A_{[wet,\,p]}$.

**18.** System zur Stabilitätsregelung eines Fahrzeugs nach Anspruch 17, bei dem eine lineare Regression verwendet wird und man die Koeffizienten $A_{wet}$ und $B_{wet}$ auf folgende Art und Weise berechnet:

•

$$\frac{dG}{dt} = A^{WET} \cdot G + B^{WET} \,,$$

und der Zielwert für den Schlupf $G^{Cwet}$ sich wie folgt ergibt:

•

$$G^{Cwet} = \frac{dG\_tgt - B^{WET}}{A^{WET}} \,.$$

**19.** System zur Stabilitätsregelung eines Fahrzeugs nach Anspruch 18, bei dem "dG_tgt" 200% pro Sekunde beträgt.

**20.** System zur Stabilitätsregelung eines Fahrzeugs nach Anspruch 18, bei dem "dG_tgt" als Anpassungsparameter verwendet wird.

**21.** System zur Stabilitätsregelung eines Fahrzeugs nach einem der Ansprüche 2 bis 20, bei dem die Modulationseinrichtung für die Längskraft auf die Bremsvorgabe einwirkt und man die angegebenen Operationen bei jedem Beginn eines Bremsmanövers initialisiert (i = 0).

**22.** System zur Stabilitätsregelung eines Fahrzeugs nach einem der Ansprüche 2 bis 20, bei dem die Modulationseinrichtung für die Längskraft auf das Motormoment auf die Räder einwirkt und man die angegebenen Operationen bei jedem Beginn einer Vorgabe für die Änderung des Motormoments auf über einen vorgegebenen Schwellenwert für das Moment initialisiert (i = 0).

23. System zur Stabilitätsregelung eines Fahrzeugs nach einem der Ansprüche 2 bis 22, bei dem vor allen Operationen, bei denen die Änderungskurve von $\mu_i$ in Abhängigkeit von $G_i$ ausgewertet wird, eine Korrektur am Beginn der Kurve vorgenommen wird, indem die ersten realen Paare ($\mu_i$, $G_i$) eliminiert werden, so lange die Änderung von $\mu_i$ in Anhängigkeit von $G_i$ nicht im Wesentlichen konstant ist, und indem der Schlupf $G_0$ zu einem Reibungskoeffizienten null gesucht wird, so dass das Paar (O, $G_0$) und die nicht eliminierten Paare ($\mu_i$, $G_i$) im Wesentlichen ausgerichtet sind, und wobei eine Kurve verwendet wird, die von (0, $G_0$) ausgeht und die nicht eliminierten Paare ($\mu_i$, $G_i$) verbindet, so dass für jeden Wert von $G_i$, der größer als $G_0$ ist, $G_i$ ersetzt wird durch $G_i$ - $G_0$.

24. System zur Stabilitätsregelung eines Fahrzeugs nach einem der Ansprüche 2 bis 23, bei dem dann, wenn die Änderung des Schlupfes in Bezug auf die Zeit größer als ein vorgegebener Schwellenwert ist, man vor allen Operationen, bei denen die Kurve der Änderung von $\mu_i$ in Abhängigkeit von $G_i$ ausgewertet wird, eine Korrektur am Ende der Kurve vornimmt, indem man die Werte von $\mu_i$, die denjenigen Schlupfwerten entsprechen, welche die Änderung des Schlupfwertes in Bezug auf die Zeit über den vorgegebenen Schwellenwert für die Änderung anheben, durch die folgenden korrigierten Werte ersetzt:

$$\mu_i^{Corr} = \mu_i \cdot \left[ Max\left(\frac{dG}{dt};1\right)\right]^{-ACorr} ,$$

wobei "Acorr" ein vorgegebener Parameter ist.

25. System zur Stabilitätsregelung eines Fahrzeugs nach Anspruch 24, bei dem "Acorr" einen Wert von etwa 0,2 annimmt.

26. System zur Stabilitätsregelung eines Fahrzeugs nach Anspruch 25, bei dem "Acorr" als Anpassungsparameter verwendet wird.

27. System zur Stabilitätsregelung eines Fahrzeugs, bei dem gleichzeitig die Algorithmen einer der Ansprüche 9 bis 16 und einer der Ansprüche 17 bis 20 eingesetzt werden, wobei die Auswahl des optimalen Schlupfes auf die folgende Art und Weise erfolgt:

   • Berechnen des relativen Abstandes zwischen $G^{Cavg}$ und $G^{Cwet}$ als Absolutwert $G^E$,
   • Vorauswahl eines Wertes $G^{Csel\#1}$ auf die folgende Art und Weise:

   ⇒ Solange die Änderung von G bezüglich der Zeit in einer vorgegebenen Zone liegt, Verwendung des Wertes $G^{Cavg}$ als Wert $G^{Csel\#1}$,
   ⇒ wenn die Änderung von G in Bezug auf die Zeit nicht in der vorgegebenen Zone liegt, Bestimmen eines vorgegebenen kritischen Bereiches, dessen Amplitude von der Änderung von G bezüglich der Zeit abhängt, und:

   - wenn $G^E$ in dem vorgegebenen kritischen Bereich liegt, Verwenden des Wertes $G^{Cavg}$ als Wert $G^{Csel\#1}$,
   - wenn $G^E$ nicht in dem vorgegebenen kritischen Bereich liegt, Verwenden des Wertes $G^{Cwet}$ als Wert $G^{Csel\#1}$,

   • Verwenden des Wertes $G^{Csel\#1}$ als endgültige Auswahl für den optimalen Wert des Schlupfes $G^{Opt}$.

28. System zur Stabilitätsregelung eines Fahrzeugs nach Anspruch 27, bei dem die genannte vorgegebene Zone den Änderungen des Schlupfes G bezüglich der Zeit entspricht, die kleiner als ein unterer Grenzwert sind, und der genannte vorgegebene kritische Bereich den Änderungen des Schlupfes G bezüglich der Zeit entspricht, die größer als eine erste kritische Schwelle $\Delta G^{max}$ sind.

29. System zur Stabilitätsregelung eines Fahrzeugs nach einem der Ansprüche 27 und 28, bei dem die endgültige Auswahl durch die folgenden Schritte ersetzt wird:

   • Wenn die Änderung von G bezüglich der Zeit in einem vorgegebenen Bereich liegt, dann ist der Wert für den optimalen Schlupf $G^{Opt}$ gleich $G^{Csel\#1}$;
• wenn die Änderung von G bezüglich der Zeit nicht in dem vorgegebenen Bereich liegt und wenn die Differenz $G^{E2}$ als Absolutwert zwischen $G^{Cinvt}$ und $G^{Csel\#1}$ in einem vorgegebenen optimalen Bereich liegt, dann ist der optimale Wert für den Schlupf $G^{Opt}$ gleich $G^{Cinvt}$;
• wenn die Änderung von G bezüglich der Zeit nicht im vorgegebenen Bereich liegt und wenn die Differenz $G^{E2}$ als Absolutwert zwischen $G^{Cinvt}$ und $G^{Csel\#1}$ nicht in dem vorgegebenen optimierten Bereich liegt, dann ist der optimale Wert für den Schlupf $G^{Opt}$ gleich $G^{Cse1\#1}$.

30. System zur Stabilitätsregelung eines Fahrzeugs nach Anspruch 29, bei dem der genannte vorgegebene Bereich den Änderungen des Schlupfes G bezüglich der Zeit entspricht, die größer als ein vorgegebener Schwellenwert für die Auswahl sind, und der genannte vorgegebene optimierte Bereich den Änderungen des Schlupfes G bezüglich der Zeit entspricht, die kleiner als ein optimierter Schwellenwert $\Delta G^{Opt}$ sind.

31. System zur Stabilitätsregelung eines Fahrzeugs nach Anspruch 30, bei dem die kritische und die optimierte Schwelle berechnet werden durch einen Prozess, der ausgewählt wird aus einer Gruppe, die die unscharfe Logik und die Boolesche Logik und eine mathematische Funktion enthält.

32. System zur Stabilitätsregelung eines Fahrzeugs nach Anspruch 30, bei dem der untere Grenzwert, die kritische Schwelle, die Auswahlschwelle und die optimierte Schwelle Anpassungsparameter sind.

33. System zur Stabilitätsregelung eines Fahrzeugs, bei dem gleichzeitig die Algorithmen einer der Ansprüche 6 bis 8 und einer der Ansprüche 9 bis 16 eingesetzt werden, wobei die Auswahl des optimalen Schlupfes auf die folgende Art und Weise erfolgt:

   • Vorauswahl eines Wertes $G^{Csel\#1}$ auf die folgende Art und Weise:

      ⇒ wenn die Änderung von G bezüglich der Zeit in einem vorgegebenen Bereich liegt, dann ist der Wert $G^{Cse1\#1}$ gleich $G^{Cavg}$;
      ⇒ wenn die Änderung von G bezüglich der Zeit nicht in dem vorgegebenen Bereich liegt und wenn die Differenz $G^{E2}$ als Absolutwert zwischen $G^{Cinvt}$ und $G^{Cavg}$ in einem vorgegebenen optimalen Bereich liegt, dann ist der Wert $G^{Csel\#1}$ gleich $G^{Cinvt}$;
      ⇒ wenn die Änderung von G bezüglich der Zeit nicht im vorgegebenen Bereich liegt und wenn die Differenz $G^{E2}$ als Absolutwert zwischen $G^{Cinvt}$ und $G^{Csel\#1}$ nicht in dem vorgegebenen optimierten Bereich liegt, dann ist der Wert $G^{Csel\#1}$ gleich $G^{Cavg}$.

   • Verwenden des Wertes $G^{Csel\#1}$ als endgültige Auswahl für den optimalen Wert des Schlupfes $G^{Opt}$.

34. System zur Stabilitätsregelung eines Fahrzeugs nach Anspruch 33, bei dem der vorgegebene Bereich den Änderungen des Schlupfes G bezüglich der Zeit entspricht, die größer als ein vorgegebener Schwellenwert für die Auswahl sind, und der vorgegebene optimierte Bereich den Änderungen des Schlupfes G bezüglich der Zeit entspricht, die kleiner als ein optimierter Schwellenwert $\Delta G^{opt}$ sind.

35. System zur Stabilitätsregelung eines Fahrzeugs, bei dem gleichzeitig der Algorithmus einer der Ansprüche 17 bis 19 eingesetzt wird, wobei die endgültige Auswahl durch die folgenden Schritte ersetzt wird:

   • Berechnen des relativen Abstandes zwischen $G^{Cavg}$ und $G^{Cwet}$ als Absolutwert $G^{E}$,
   • Vorauswahl eines Wertes $G^{Opt}$ auf die folgende Art und Weise:

      ⇒ Solange die Änderung von G bezüglich der Zeit in einer vorgegebenen Zone liegt, Verwendung des Wertes $G^{Opt}$ als Wert $G^{Csel\#1}$,
      ⇒ wenn die Änderung von G in Bezug auf die Zeit nicht in der vorgegebenen Zone liegt, Bestimmen eines vorgegebenen kritischen Bereiches, dessen Amplitude von der Änderung von G bezüglich der Zeit abhängt, und:

         - wenn $G^{E}$ in dem vorgegebenen kritischen Bereich liegt, Verwenden des Wertes $G^{Opt}$ als Wert $G^{Csel\#1}$,
         - wenn $G^{E}$ nicht in dem vorgegebenen kritischen Bereich liegt, Verwenden des Wertes $G^{Cwet}$ als Wert $G^{Opt}$.

**36.** System zur Stabilitätsregelung eines Fahrzeugs nach Anspruch 35, bei dem der vorgegebene Bereich den Änderungen des Schlupfes G bezüglich der Zeit entspricht, die kleiner als ein unterer Grenzwert sind, und der vorgegebene optimierte Bereich den Änderungen des Schlupfes G bezüglich der Zeit entspricht, die größer als ein erster kritischer Schwellenwert $\Delta G^{max}$ sind.

**37.** System zur Stabilitätsregelung eines Fahrzeugs nach Anspruch 36, bei dem die kritische und die optimierte Schwelle berechnet werden durch einen Prozess, der ausgewählt wird aus einer Gruppe, die die unscharfe Logik und die Boolesche Logik und eine mathematische Funktion enthält.

**38.** System zur Stabilitätsregelung eines Fahrzeugs nach Anspruch 36, bei dem der untere Grenzwert, die kritische Schwelle, die Auswahlschwelle und die optimierte Schwelle Anpassungsparameter sind.

**39.** System zur Stabilitätsregelung eines Fahrzeugs nach Anspruch 1, bei dem der Parameter P der Driftwinkel $\delta$ des Reifens ist und der charakteristische Parameter Q die Driftlängskraft $F_y$ des Reifens ist, wobei das System Einrichtungen umfasst, um einen Parameter "$\xi$" in Abhängigkeit von Befehlen, die von dem Fahrer des Fahrzeugs über seine Eingabeeinrichtung eingegeben wurden, und in Abhängigkeit von Befehlen, die durch einen Trajektorien-Controller ausgegeben werden, zu steuern, Einrichtungen zum Modulieren des Parameters "$\xi$" und Einrichtungen, um den Parameter des Driftwinkels $\delta^{Opt}$ jedes Mal, wenn die Einrichtungen zum Vorgeben des Parameters "$\xi$" aktiviert werden, auf folgende Art zu berechnen:

    • bei jeder Aktivierung des Systems zur Vorgabe der Änderung von $\xi$ bei wenigstens zwei verschiedenen Indizes "i" des Driftwinkels Verwenden verschiedener Werte $F_{Yi}$ und des dazugehörigen Driftwinkels $\delta_i$, den man durch Abschätzung oder direkte Messung erhält,
    • Durchführen von "n" Berechnungs-Algorithmen parallel zueinander zum Bestimmen jeweils eines Zielwertes für den Schlupf und somit Erzeugen von soviel Zielwerten $\delta^{Cn}$ wie Algorithmen durchgeführt werden;
    • Auswählen des besten Zielwertes $\delta^{Cn}$ als optimalen Parameterwert durch Vergleichen von "n" Zielwerten $\delta^{Cn}$, um diejenigen Zielwerte zu eliminieren, die am wenigsten wahrscheinlich sind.

Figure 1

Figure 2

Figure 3

Figure 4

μ

∝1 (T=1)
∝2 (T=2)
∝3 (T=3)

G

**Figure 5**

μ

$$\mu = A^{LIN} + B^{LIN}$$

$$\mu = A^{AVG} \cdot G$$

**Go**

G

**Figure 6**

Figure 7

Figure 8